# EUROPEAN PATENT APPLICATION

(11) **EP 4 149 166 A1**
(43) Date of publication of application: **15.03.2023**
(21) Application number: 21808276.6
(22) Date of filing: 18.03.2021
(51) Int. Cl.: H04W 48/08, H04W 48/18

(54) **NETWORK ACCESSING METHOD, APPARATUS, AND SYSTEM**

(30) Priority: 22.05.2020 CN 202010446009
(71) Applicant: Huawei Technologies Co., Ltd., Longgang District, Shenzhen, Guangdong 518129 (CN)
(72) Inventor: ZHU, Qianghua, Shenzhen, Guangdong 518129 (CN); ZHU, Fenqin, Shenzhen, Guangdong 518129 (CN)
(74) Representative: Gill Jennings & Every LLP
(86) International application number: PCT/CN2021/081549
(87) International publication number: WO 2021/232919

(57) **Abstract**

Embodiments of this application relate to the field of communication technologies, and provide a network access method, an apparatus, and a system, to resolve a problem caused when a first terminal attempts to access a non-public network. The method includes: A first terminal sends a first message to an access management network element in a first non-public network, where the first message is used to request to register the first terminal with the first non-public network. The first terminal receives a second message from the access management network element, where the second message is used to indicate that registration of the first terminal with the first non-public network is rejected, the second message includes first indication information, and the first indication information indicates that access of the first terminal to the first non-public network is forbidden. The first terminal adds information about the first non-public network to a forbidden network list of the first terminal based on the first indication information.

## Description

This application claims priority to Chinese Patent Application No. 202010446009.0, filed with the China National Intellectual Property Administration on May 22, 2020 and entitled "NETWORK ACCESS METHOD, APPARATUS, AND SYSTEM", which is incorporated herein by reference in its entirety.

### TECHNICAL FIELD

This application relates to the field of communication technologies, and in particular, to a network access method, an apparatus, and a system.

### BACKGROUND

A terminal having a capability or permission to access a non-public network (which is referred to as a private network terminal for short below) may access a public network through the non-public network to perform data transmission. However, in different phases of 3GPP evolution, the private network terminal accesses the non-public network in different manners. For example, in the R16 phase of 3GPP, the private network terminal may request to register with the non-public network by using subscription information between the private network terminal and the non-public network, and the private network terminal may request to register with the public network by using subscription information between the private network terminal and the public network. However, in the R17 phase of 3GPP, the private network terminal may request to register with the non-public network by using subscription information between the private network terminal and the public network.

However, currently, a current technology does not record a solution used when a terminal that does not have a capability or permission to access a non-public network (which is referred to as a non-private network terminal for short below) attempts to access a non-public network defined in the R16 phase of 3GPP or the R17 phase of 3GPP.

### SUMMARY

Embodiments of this application provide a network access method, an apparatus, and a system, to resolve a problem caused when a first terminal attempts to access a non-public network.

To achieve the foregoing objective, embodiments of this application provide the following technical solutions.

According to a first aspect, an embodiment of this application provides a network access method. The method includes: A first terminal sends, to an access management network element in a first non-public network, a first message that is used to request to register the first terminal with the first non-public network. The first terminal receives, from the access management network element, a second message that is used to indicate that registration of the first terminal with the first non-public network is rejected. The second message includes first indication information, and the first indication information indicates that access of the first terminal to the first non-public network is forbidden. The first terminal updates a forbidden network list of the first terminal based on the first indication information. An updated forbidden network list includes information about the first non-public network.

It should be understood that the first terminal may obtain the updated forbidden network list by updating the forbidden network list of the first terminal.

This embodiment of this application provides the network access method. In the method, the first terminal sends the first message to the access management network element in the first non-public network, to request to register the first terminal with the first non-public network. Then, the first terminal receives the second message from the access management network element, where the second message indicates that the registration of the first terminal with the first non-public network is rejected, and the first indication information indicates that the access of the first terminal to the first non-public network is forbidden. This helps the first terminal update the forbidden network list of the first terminal based on the first indication information, so that the updated forbidden network list includes the information about the first non-public network. Subsequently, when selecting a network for registration, the first terminal can avoid selecting the first non-public network that the first terminal is forbidden to access. This solution can resolve a problem caused when the first terminal that does not have permission to access a non-public network attempts to access the first non-public network.

In a possible implementation, the first non-public network in this embodiment of this application supports interworking with a first public network.

In a possible implementation, the first non-public network in this embodiment of this application interworks with the first public network by using a roaming architecture.

In a possible implementation, the method provided in this embodiment of this application further includes: The first terminal selects, based on the updated forbidden network list, a network other than the first non-public network for registration. This prevents the first terminal that does not have the permission to access a non-public network from accessing the first non-public network, and prevents the first terminal from automatically/manually selecting the first non-public network that the first terminal is forbidden to access.

In a possible implementation, the method provided in this embodiment of this application further includes: The first terminal starts a timer based on the first indication information. When the timer expires, the first terminal deletes the information about the first non-public network from the updated forbidden network list. This helps the first terminal continue to attempt to access the first non-public network subsequently.

In a possible implementation, the method provided in this embodiment of this application further includes: The second message includes a timer time value, and the first terminal sets the timer based on the timer time value. This helps the first terminal obtain the timer time value from the first non-public network.

In a possible implementation, the first terminal is a terminal that does not have a capability or permission to access a non-public network.

According to a second aspect, an embodiment of this application provides a network access method. The method includes: An access management network element in a first non-public network receives, from a first terminal, a first message that is used to request to register the first terminal with the first non-public network. The access management network element obtains a third message from a unified data management network element in a first public network. The access management network element sends, to the first terminal based on the third message, a second message that is used to indicate that registration of the first terminal with the first non-public network is rejected, where the second message includes first indication information indicating that access of the first terminal to the first non-public network is forbidden.

In this solution, the access management network element in the first non-public network receives, from the first terminal, the first message that is used to request to register the first terminal with the first non-public network, and then the access management network element sends, to the first terminal based on the third message, the second message that is used to indicate that the registration of the first terminal with the first non-public network is rejected, so that the first terminal that does not have permission to access a non-public network can be prevented from accessing the first non-public network.

In a possible implementation, the third message includes subscription data of the first terminal, and the subscription data includes second indication information. In an aspect, the second indication information is used to indicate that the first terminal can access only a public network. Alternatively, in another aspect, the second indication information is used to indicate that the first terminal cannot access a non-public network.

In a possible implementation, the second indication information includes a supported network list of the first terminal, and the network list does not include information about the first non-public network. Alternatively, the supported network list of the first terminal does not include information about any non-public network.

In a possible implementation, the third message includes third indication information, and the third indication information is used to indicate that subscription data of the first terminal is not successfully obtained.

In a possible implementation, the third message further includes a cause value of unsuccessful obtaining of the subscription data of the first terminal, and the cause value indicates that the first terminal is not allowed to access the first non-public network.

In a possible implementation, the third message does not include the subscription data of the first terminal.

In a possible implementation, the method provided in this embodiment of this application further includes: The access management network element determines, based on the third message, to reject the registration of the first terminal with the first non-public network.

In a possible implementation, that the access management network element determines, based on the third message, to reject the registration of the first terminal with the first non-public network includes: The access management network element determines, based on the second indication information, to reject the registration of the first terminal with the first non-public network.

In a possible implementation, that the access management network element determines, based on the third message, to reject the registration of the first terminal with the first non-public network includes: The access management network element determines, based on the third indication information, to reject the registration of the first terminal with the first non-public network.

In a possible implementation, that the access management network element determines, based on the third message, to reject the registration of the first terminal with the first non-public network includes: The access management network element determines that the third message does not include the subscription data of the first terminal, and therefore determines to reject the registration of the first terminal with the first non-public network.

According to a third aspect, an embodiment of this application provides a network access method. The method includes: A unified data management network element in a first public network receives, from an access management network element in a first non-public network, a query message that is used to query for subscription data of a first terminal. The unified data management network element sends a third message to the access management network element, where the third message includes one or more of the following: the subscription data of the first terminal and a cause value, the subscription data includes second indication information, the second indication information is used to indicate that the first terminal can access only a public network or the second indication information is used to indicate that the first terminal cannot access the first non-public network, and the cause value indicates that the first terminal is not allowed to access the first non-public network.

In a possible implementation, the second indication information includes a supported network list of the first terminal, and the network list does not include information about the first non-public network.

In a possible implementation, the third message includes third indication information, and the third indication information is used to indicate that the subscription data of the first terminal is not successfully obtained.

In a possible implementation, the third message further includes the cause value of unsuccessful obtaining of the subscription data of the first terminal, and the cause value indicates that the first terminal is not allowed to access the first non-public network.

In a possible implementation, the third message does not include the subscription data of the first terminal.

According to a fourth aspect, an embodiment of this application provides a network access method. The method includes: A second terminal receives broadcast information from an access network device in a first non-public network, where the broadcast information includes first indication information that is used to indicate that the first non-public network and a public network are interworked. The second terminal determines, based on the broadcast information, to access the first non-public network by using first subscription information. The first subscription information is subscription information of the second terminal in a first public network.

In a possible implementation, a first identifier of the second terminal that is carried in the first subscription information is related to the first public network. For example, the first identifier of the second terminal carries information about the first public network. For example, the first public network is a first PLMN, and the information about the first public network may be a first PLMN ID.

This embodiment of this application provides the network access method. In the method, the second terminal receives the broadcast information from the access network device in the first non-public network, so that the second terminal may determine that the first non-public network and the public network are interworked. This helps a terminal having a capability or permission to access a non-public network subsequently access the first non-public network by using subscription information between the terminal and the public network. In addition, because a terminal that does not have a capability or permission to access a non-public network cannot receive the broadcast information, a waste of network resources that is caused when the terminal that does not have the capability or permission to access a non-public network attempts to access the first non-public network can be avoided.

In a possible implementation, the method provided in this embodiment of this application may further include: The second terminal accesses the first non-public network by using the first subscription information.

In a possible implementation, that the second terminal accesses the first non-public network by using the first subscription information includes: The second terminal sends a registration request message to an access management network element in the first non-public network, where the registration request message carries the first identifier of the second terminal.

In a possible implementation, the second terminal is a terminal that has a capability or permission to access a non-public network.

In a possible implementation, the broadcast information is further used to indicate that the first non-public network and the public network are interworked by using a roaming architecture.

In a possible implementation, the broadcast information is sent for a terminal that has a capability or permission to access a non-public network.

In a possible implementation, the broadcast information further includes information about one or more public networks that interwork with the first non-public network, and the information about the public network may be an identifier of the public network. For example, the public network is a PLMN, and the identifier of the public network may be a PLMN ID. The first public network belongs to the one or more public networks. This helps the second terminal determine the one or more public networks that interwork with the first non-public network.

In a possible implementation, a network selection priority of the first public network is the highest among network selection priorities of the one or more public networks.

According to a fifth aspect, an embodiment of this application provides a network access method. The method includes: An access network device in a first non-public network sends broadcast information, where the broadcast information includes first indication information, and the first indication information is used to indicate that the first non-public network and a public network are interworked.

In a possible implementation, the broadcast information further includes information about one or more public networks that interwork with the first non-public network.

According to a sixth aspect, an embodiment of this application provides a network access method. The method includes: A second terminal sends a first message to an access management network element in a first non-public network by using first subscription information, where the first message is used to indicate to request to register the second terminal with the first non-public network, and the first subscription information is subscription information of the second terminal in the first non-public network, or the first subscription information is subscription information of the second terminal in a first public network. The second terminal receives, from the access management network element, a second message that is used to indicate that registration of the second terminal with the first non-public network is rejected. The second message includes fourth indication information, and the fourth indication information is used to indicate a cause for rejecting the registration of the second terminal with the first non-public network.

In a possible implementation, when the first public network interworks with the first non-public network by using a roaming architecture, the first subscription information is the subscription information of the second terminal in the first non-public network. In this case, a second identifier of the second terminal that is carried in the first subscription information is related to the first non-public network. For example, the second identifier of the second terminal includes an identifier of the first non-public network. The identifier of the first non-public network is determined based on an identifier of a target public network and a network identifier (Network identifier, NID). The target public network identifier may be a reserved value provided by a third-party operator for the target public network.

In a possible implementation, when the first public network interworks with the first non-public network through an N3IWF, the first subscription information is the subscription information of the second terminal in the first public network. In this case, a third identifier of the second terminal that is carried in the first subscription information is related to the first public network. For example, the third identifier of the second terminal includes information about the first public network. For example, information about the first non-public network is an identifier of the first non-public network. For example, the identifier of the first non-public network is a first PLMN ID.

In a possible implementation, the first subscription information is the subscription information of the second terminal in the first non-public network, and the method provided in this embodiment of this application further includes: The second terminal registers with the first non-public network based on the fourth indication information by using second subscription information of the second terminal, where the second subscription information is subscription information of the second terminal in the first public network.

In a possible implementation, the method provided in this embodiment of this application further includes: The second terminal receives a fourth message from the access management network element, where the fourth message includes a candidate network list of the second terminal, and the candidate network list includes information about the first non-public network. This helps the second terminal determine that the second terminal can register with the first non-public network.

In a possible implementation, the method provided in this embodiment of this application further includes: The second terminal receives a fifth message from the access management network element, where the fifth message is used to indicate that registration of the second terminal with the first non-public network is accepted. The second terminal adds the information about the first non-public network to the candidate network list of the second terminal. This helps the second terminal determine that the second terminal can register with the first non-public network and subsequently select the second subscription information of the second terminal to register with the first non-public network.

In a possible implementation, the fourth indication information is used to indicate that the second terminal is an illegal terminal.

In a possible implementation, when the first subscription information is the subscription information of the second terminal in the first public network, and the second terminal further has third subscription information of the second terminal in the first non-public network, the method provided in this embodiment of this application further includes: The second terminal requests, by using the third subscription information, to register with the first non-public network. The third subscription information includes a fourth identifier of the second terminal, and the fourth identifier is related to the first non-public network. For example, the fourth identifier includes information about the first non-public network. For example, the information about the first non-public network is an identifier of the first non-public network. In this case, the identifier of the first non-public network is determined based on an identifier of a target public network and a NID.

In a possible implementation, that the second terminal requests, by using the third subscription information, to register with the first non-public network includes: The second terminal sends a registration request message to the access management network element in the first non-public network, where the registration request message includes the fourth identifier of the second terminal.

According to a seventh aspect, an embodiment of this application provides a network access method. The method includes: An access management network element in a first non-public network receives, from a second terminal, a first message that is used to indicate that the second terminal requests, by using first subscription information, to register with the first non-public network, where the first subscription information is subscription information of the second terminal in the first non-public network, or the first subscription information is subscription information of the second terminal in a first public network. The access management network element sends a second message to the second terminal, where the second message is used to reject registration of the second terminal with the first non-public network, the second message includes fourth indication information, and the fourth indication information is used to indicate a cause for rejecting the registration of the second terminal with the first non-public network.

In a possible implementation, the method provided in this embodiment of this application further includes: The access management network element sends a fourth message to the second terminal, where the fourth message includes a candidate network list of the second terminal. The candidate network list includes information about the first non-public network. For example, the information about the first non-public network is an identifier of the first non-public network. In this case, the identifier of the first non-public network is determined based on an identifier of a target public network and a NID.

In a possible implementation, the method provided in this embodiment of this application further includes: The access management network element sends a fifth message to the second terminal, where the fifth message is used to indicate that registration of the second terminal with the first non-public network is accepted. This helps the second terminal determine, based on the fifth message, that the second terminal can register with the first non-public network.

In a possible implementation, the fourth indication information is used to indicate that the second terminal is an illegal terminal.

In a possible implementation, the method provided in this embodiment of this application further includes: The access management network element determines to reject the registration of the second terminal with the first non-public network.

In a possible implementation, that the access management network element determines to reject the registration of the second terminal with the first non-public network includes: The access management network element determines, based on configuration information or the subscription information of the second terminal in the first non-public network, to reject the registration of the second terminal with the first non-public network.

According to an eighth aspect, an embodiment of this application provides a communication apparatus. The communication apparatus may implement the method according to any one of the first aspect or the possible implementations of the first aspect, and therefore may further implement beneficial effects according to any one of the first aspect or the possible implementations of the first aspect. The communication apparatus may be a first terminal, or may be an apparatus that supports the first terminal in implementing the method according to any one of the first aspect or the possible implementations of the first aspect, for example, a chip used in the first terminal. The communication apparatus may implement the foregoing method by using software or hardware, or by executing corresponding software by hardware.

In an example, an embodiment of this application provides a communication apparatus. The communication apparatus includes a communication unit and a processing unit. The processing unit is configured to process information, and the communication unit is configured to receive or send information. For example, the communication unit is configured to send, to an access management network element in a first non-public network, a first message that is used to request to register the first terminal with the first non-public network. The communication unit is further configured to receive, from the access management network element, a second message that is used to indicate that registration of the first terminal with the first non-public network is rejected. The second message includes first indication information, and the first indication information indicates that access of the first terminal to the first non-public network is forbidden. The processing unit is configured to update a forbidden network list of the first terminal based on the first indication information, where an updated forbidden network list includes information about the first non-public network.

In a possible implementation, the first non-public network in this embodiment of this application supports interworking with a first public network.

In a possible implementation, the first non-public network in this embodiment of this application interworks with the first public network by using a roaming architecture.

In a possible implementation, the processing unit is further configured to select, based on the updated forbidden network list, a network other than the first non-public network for registration.

In a possible implementation, the processing unit is further configured to: start a timer based on the first indication information; and when the timer expires, delete the information about the first non-public network from the updated forbidden network list.

In a possible implementation, the second message includes a timer time value, and the first terminal sets the timer based on the timer time value.

In a possible implementation, the first terminal is a terminal that does not have a capability or permission to access a non-public network.

For example, when the communication apparatus is a chip or a chip system in the first terminal, the processing unit may be a processor, and the communication unit may be a communication interface. For example, the communication interface may be an input/output interface, a pin, or a circuit. The processing unit executes instructions stored in a storage unit, to enable the first terminal to implement the network access method according to any one of the first aspect or the possible implementations of the first aspect. The storage unit may be a storage unit (for example, a register or a cache) in the chip, or may be a storage unit (for example, a read-only memory or a random access memory) that is in the first terminal and that is outside the chip.

According to a ninth aspect, an embodiment of this application provides a communication apparatus. The communication apparatus may implement the method according to any one of the second aspect or the possible implementations of the second aspect, and therefore may further implement beneficial effects according to any one of the second aspect or the possible implementations of the second aspect. The communication apparatus may be an access management network element, or may be an apparatus that supports the access management network element in implementing the method according to any one of the second aspect or the possible implementations of the second aspect, for example, a chip used in the access management network element. The communication apparatus may implement the foregoing method by using software or hardware, or by executing corresponding software by hardware.

In an example, an embodiment of this application provides a communication apparatus. The communication apparatus is an access management network element in a first non-public network, or a chip used in the access management network element. The apparatus includes a communication unit and a processing unit. The processing unit is configured to process information, and the communication unit is configured to receive or send information. For example, the communication unit is configured to receive, from a first terminal, a first message that is used to request to register the first terminal with the first non-public network. The communication unit is configured to obtain a third message from a unified data management network element in a public network. The communication unit is configured to send, to the first terminal based on the third message, a second message that is used to indicate that registration of the first terminal with the first non-public network is rejected, where the second message includes first indication information, and the first indication information indicates that access of the first terminal to the first non-public network is forbidden.

In a possible implementation, the third message includes subscription data of the first terminal, and the subscription data includes second indication information. In an aspect, the second indication information is used to indicate that the first terminal can access only a public network. Alternatively, in another aspect, the second indication information is used to indicate that the first terminal cannot access a non-public network.

In a possible implementation, the second indication information includes a supported network list of the first terminal, and the network list does not include information about the first non-public network.

In a possible implementation, the third message includes third indication information, and the third indication information is used to indicate that subscription data of the first terminal is not successfully obtained.

In a possible implementation, the third message does not include the subscription data of the first terminal.

In a possible implementation, the third message further includes a cause value of unsuccessful obtaining of the subscription data of the first terminal, and the cause value indicates that the first terminal is not allowed to access the first non-public network.

In a possible implementation, the processing unit is configured to determine, based on the third message, to reject the registration of the first terminal with the first non-public network.

In a possible implementation, that the processing unit is configured to determine, based on the third message, to reject the registration of the first terminal with the first non-public network includes: The processing unit is configured to determine, based on the second indication information, to reject the registration of the first terminal with the first non-public network.

In a possible implementation, that the processing unit is configured to determine, based on the third message, to reject the registration of the first terminal with the first non-public network includes: The processing unit is configured to determine, based on the third indication information, to reject the registration of the first terminal with the first non-public network.

For example, when the communication apparatus is a chip or a chip system in the access management network element, the processing unit may be a processor, and the communication unit may be a communication interface. For example, the communication interface may be an input/output interface, a pin, or a circuit. The processing unit executes instructions stored in a storage unit, to enable the access management network element to implement the network access method according to any one of the second aspect or the possible implementations of the second aspect. The storage unit may be a storage unit (for example, a register or a cache) in the chip, or may be a storage unit (for example, a read-only memory or a random access memory) that is in the access management network element and that is outside the chip.

According to a tenth aspect, an embodiment of this application provides a communication apparatus. The communication apparatus may implement the method according to any one of the third aspect or the possible implementations of the third aspect, and therefore may further implement beneficial effects according to any one of the third aspect or the possible implementations of the third aspect. The communication apparatus may be a unified data management network element, or may be an apparatus that supports the unified data management network element in implementing the method according to any one of the third aspect or the possible implementations of the third aspect, for example, a chip used in the unified data management network element. The communication apparatus may implement the foregoing method by using software or hardware, or by executing corresponding software by hardware.

In an example, an embodiment of this application provides a communication apparatus. The communication apparatus includes a communication unit and a processing unit. The processing unit is configured to process information, and the communication unit is configured to receive or send information. For example, the communication unit is configured to receive, from an access management network element in a first non-public network, a query message that is used to query for subscription data of a first terminal. The communication unit is further configured to send a third message to the access management network element, where the third message includes one or more of the following: the subscription data of the first terminal and a cause value, the subscription data includes second indication information, the second indication information is used to indicate that the first terminal can access only a public network or the second indication information is used to indicate that the first terminal cannot access a non-public network, and the cause value indicates that the first terminal is not allowed to access the first non-public network.

In a possible implementation, the second indication information includes a supported network list of the first terminal, and the network list does not include information about the first non-public network.

In a possible implementation, the third message includes third indication information, and the third indication information is used to indicate that the subscription data of the first terminal is not successfully obtained.

In a possible implementation, the third message further includes the cause value of unsuccessful obtaining of the subscription data of the first terminal, and the cause value indicates that the first terminal is not allowed to access the first non-public network.

In a possible implementation, the third message does not include the subscription data of the first terminal.

In a possible implementation, the communication apparatus is a unified data management network element used in a public network, or a chip in the unified data management network element used in the public network.

For example, when the communication apparatus is a chip or a chip system in the unified data management network element, the processing unit may be a processor, and the communication unit may be a communication interface. For example, the communication interface may be an input/output interface, a pin, or a circuit. The processing unit executes instructions stored in a storage unit, to enable the unified data management network element to implement the network access method according to any one of the third aspect or the possible implementations of the third aspect. The storage unit may be a storage unit (for example, a register or a cache) in the chip, or may be a storage unit (for example, a read-only memory or a random access memory) that is in the unified data management network element and that is outside the chip.

According to an eleventh aspect, an embodiment of this application provides a communication apparatus. The communication apparatus may implement the method according to any one of the fourth aspect or the possible implementations of the fourth aspect, and therefore may further implement beneficial effects according to any one of the fourth aspect or the possible implementations of the fourth aspect. The communication apparatus may be a second terminal, or may be an apparatus that supports the second terminal in implementing the method according to any one of the fourth aspect or the possible implementations of the fourth aspect, for example, a chip used in the second terminal. The communication apparatus may implement the foregoing method by using software or hardware, or by executing corresponding software by hardware.

In an example, an embodiment of this application provides a communication apparatus. The communication apparatus includes a communication unit and a processing unit. The processing unit is configured to process information, and the communication unit is configured to receive or send information. For example, the communication unit is configured to receive broadcast information from an access network device in a first non-public network, where the broadcast information includes first indication information that is used to indicate that the first non-public network and a public network are interworked. The processing unit is configured to determine, based on the broadcast information, to access the first non-public network by using first subscription information. The first subscription information is subscription information of the second terminal in a first public network.

In a possible implementation, the second terminal is a terminal that has a capability or permission to access a non-public network.

In a possible implementation, the broadcast information is further used to indicate that the first non-public network and the public network are interworked by using a roaming architecture.

In a possible implementation, the broadcast information further includes information about one or more public networks that interwork with the first non-public network, and the first public network belongs to the one or more public networks. This helps the second terminal determine the one or more public networks that interwork with the first non-public network.

In a possible implementation, a network selection priority of the first public network is the highest among network selection priorities of the one or more public networks.

In a possible implementation, a first identifier of the second terminal that is carried in the first subscription information is related to the first public network. For example, the first identifier of the second terminal carries information about the first public network. For example, the first public network is a first PLMN, and the information about the first public network is an identifier of the first public network. In this case, the identifier of the first public network may be a first PLMN ID.

In a possible implementation, the processing unit is further configured to access the first non-public network by using the first subscription information.

In a possible implementation, that the processing unit is further configured to access the first non-public network by using the first subscription information includes: The processing unit is further configured to send a registration request message to an access management network element in the first non-public network through the communication unit, where the registration request message carries the first identifier of the second terminal.

For example, when the communication apparatus is a chip or a chip system in the second terminal, the processing unit may be a processor, and the communication unit may be a communication interface. For example, the communication interface may be an input/output interface, a pin, or a circuit. The processing unit executes instructions stored in a storage unit, to enable the second terminal to implement the network access method according to any one of the fourth aspect or the possible implementations of the fourth aspect. The storage unit may be a storage unit (for example, a register or a cache) in the chip, or may be a storage unit (for example, a read-only memory or a random access memory) that is in the second terminal and that is outside the chip.

According to a twelfth aspect, an embodiment of this application provides a communication apparatus. The communication apparatus may implement the method according to any one of the fifth aspect or the possible implementations of the fifth aspect, and therefore may further implement beneficial effects according to any one of the fifth aspect or the possible implementations of the fifth aspect. The communication apparatus may be an access network device, or may be an apparatus that supports the access network device in implementing the method according to any one of the fifth aspect or the possible implementations of the fifth aspect, for example, a chip used in the access network device. The communication apparatus may implement the foregoing method by using software or hardware, or by executing corresponding software by hardware.

In an example, an embodiment of this application provides a communication apparatus. The communication apparatus includes a communication unit and a processing unit. The processing unit is configured to process information, and the communication unit is configured to receive or send information. For example, the communication unit is configured to send broadcast information, where the broadcast information includes first indication information, and the first indication information is used to indicate that a first non-public network and a public network are interworked.

In a possible implementation, the broadcast information further includes information about one or more public networks that interwork with the first non-public network.

In a possible implementation, the communication apparatus is applicable to a non-public network.

For example, when the communication apparatus is a chip or a chip system in the access network device, the processing unit may be a processor, and the communication unit may be a communication interface. For example, the communication interface may be an input/output interface, a pin, or a circuit. The processing unit executes instructions stored in a storage unit, to enable the access network device to implement the network access method according to any one of the fifth aspect or the possible implementations of the fifth aspect. The storage unit may be a storage unit (for example, a register or a cache) in the chip, or may be a storage unit (for example, a read-only memory or a random access memory) that is in the access network device and that is outside the chip.

According to a thirteenth aspect, an embodiment of this application provides a communication apparatus. The communication apparatus may implement the method according to any one of the sixth aspect or the possible implementations of the sixth aspect, and therefore may further implement beneficial effects according to any one of the sixth aspect or the possible implementations of the sixth aspect. The communication apparatus may be a second terminal, or may be an apparatus that supports the second terminal in implementing the method according to any one of the sixth aspect or the possible implementations of the sixth aspect, for example, a chip used in the second terminal. The communication apparatus may implement the foregoing method by using software or hardware, or by executing corresponding software by hardware.

In an example, an embodiment of this application provides a communication apparatus. The communication apparatus is a second terminal or a chip used in the second terminal. The communication apparatus includes a communication unit and a processing unit. The processing unit is configured to process information, and the communication unit is configured to receive or send information. For example, the communication unit is configured to send a first message to an access management network element in a first non-public network by using first subscription information, where the first message is used to indicate to request to register the second terminal with the first non-public network, and the first subscription information is subscription information of the second terminal in the first non-public network, or the first subscription information is subscription information of the second terminal in a first public network. The communication unit is configured to receive, from the access management network element, a second message that is used to indicate that registration of the second terminal with the first non-public network is rejected. The second message includes fourth indication information, and the fourth indication information is used to indicate a cause for rejecting the registration of the second terminal with the first non-public network.

In a possible implementation, when the first public network interworks with the first non-public network by using a roaming architecture, the first subscription information is the subscription information of the second terminal in the first non-public network. In this case, a second identifier of the second terminal that is carried in the first subscription information is related to the first non-public network. For example, the second identifier of the second terminal includes information about the first non-public network. For example, the information about the first non-public network is an identifier of the first non-public network. In this case, the identifier of the first non-public network is determined based on an identifier of a target public network and a NID.

In a possible implementation, when the first public network interworks with the first non-public network through an N3IWF, the first subscription information is the subscription information of the second terminal in the first public network. In this case, a third identifier of the second terminal that is carried in the first subscription information is related to the first public network. For example, the third identifier of the second terminal includes information about the first public network. For example, the information about the first public network may be an identifier of the first public network.

In a possible implementation, the first subscription information is the subscription information of the second terminal in the first non-public network, and the processing unit is further configured to perform registration with the first non-public network based on the fourth indication information by using second subscription information of the second terminal, where the second subscription information is subscription information of the second terminal in the first public network.

In a possible implementation, the communication unit is further configured to receive a fourth message from the access management network element, where the fourth message includes a candidate network list of the second terminal, and the candidate network list includes the information about the first non-public network. This helps the second terminal determine that the second terminal can register with the first non-public network.

In a possible implementation, the communication unit is further configured to receive a fifth message from the access management network element, where the fifth message is used to indicate that registration of the second terminal with the first non-public network is accepted. The second terminal adds the information about the first non-public network to the candidate network list of the second terminal. This helps the second terminal determine that the second terminal can register with the first non-public network and subsequently select the second subscription information of the second terminal to register with the first non-public network.

In a possible implementation, the fourth indication information is used to indicate that the second terminal is an illegal terminal.

In a possible implementation, when the first subscription information is the subscription information of the second terminal in the first public network, and the second terminal further has third subscription information of the second terminal in the first non-public network, the processing unit is further configured to request, by using the third subscription information, to perform registration with the first non-public network. The third subscription information includes a fourth identifier of the second terminal, and the fourth identifier is related to the first non-public network. For example, the fourth identifier includes information about the first non-public network. For example, the information about the first non-public network is an identifier of the first non-public network. In this case, the identifier of the first non-public network is determined based on an identifier of a target public network and a NID.

In a possible implementation, when the first subscription information is the subscription information of the second terminal in the first public network, and the second terminal further has third subscription information of the second terminal in the first non-public network, the processing unit is further used by the second terminal to request, by using the third subscription information, to register with the first non-public network. The third subscription information includes a fourth identifier of the second terminal, and the fourth identifier is related to the first non-public network. For example, the fourth identifier includes information about the first non-public network. For example, the information about the first non-public network is an identifier of the first non-public network. In this case, the identifier of the first non-public network is determined based on an identifier of a target public network and a NID.

In a possible implementation, the processing unit is configured to send a registration request message to the access management network element in the first non-public network through the communication unit, where the registration request message includes the fourth identifier of the second terminal.

For example, when the communication apparatus is a chip or a chip system in the second terminal, the processing unit may be a processor, and the communication unit may be a communication interface. For example, the communication interface may be an input/output interface, a pin, or a circuit. The processing unit executes instructions stored in a storage unit, to enable the second terminal to implement the network access method according to any one of the sixth aspect or the possible implementations of the sixth aspect. The storage unit may be a storage unit (for example, a register or a cache) in the chip, or may be a storage unit (for example, a read-only memory or a random access memory) that is in the second terminal and that is outside the chip.

According to a fourteenth aspect, an embodiment of this application provides a communication apparatus. The communication apparatus may implement the method according to any one of the seventh aspect or the possible implementations of the seventh aspect, and therefore may further implement beneficial effects according to any one of the seventh aspect or the possible implementations of the seventh aspect. The communication apparatus may be an access management network element, or may be an apparatus that supports the access management network element in implementing the method according to any one of the seventh aspect or the possible implementations of the seventh aspect, for example, a chip used in the access management network element. The communication apparatus may implement the foregoing method by using software or hardware, or by executing corresponding software by hardware.

In an example, an embodiment of this application provides a communication apparatus. The communication apparatus is an access management network element, or a chip used in the access management network element. The communication apparatus includes a communication unit and a processing unit. The processing unit is configured to process information, and the communication unit is configured to receive or send information. For example, the communication unit is configured to receive, from a second terminal, a first message that is used to indicate that the second terminal requests, by using first subscription information, to register with a first non-public network, where the first subscription information is subscription information of the second terminal in the first non-public network, or the first subscription information is subscription information of the second terminal in a first public network. The communication unit is configured to send a second message to the second terminal, where the second message is used to reject registration of the second terminal with the first non-public network, the second message includes fourth indication information, and the fourth indication information is used to indicate a cause for rejecting the registration of the second terminal with the first non-public network.

In a possible implementation, the communication unit is further configured to send a fourth message to the second terminal, where the fourth message includes a candidate network list of the second terminal, and the candidate network list includes information about the first non-public network.

In a possible implementation, the communication unit is further configured to send a fifth message to the second terminal, where the fifth message is used to indicate that registration of the second terminal with the first non-public network is accepted. This helps the second terminal determine, based on the fifth message, that the second terminal can register with the first non-public network.

In a possible implementation, the fourth indication information is used to indicate that the second terminal is an illegal terminal.

In a possible implementation, the processing unit is configured to determine to reject the registration of the second terminal with the first non-public network.

In a possible implementation, that the processing unit is configured to determine to reject the registration of the second terminal with the first non-public network includes: The processing unit is configured to determine, based on configuration information or the subscription information of the second terminal in the first non-public network, to reject the registration of the second terminal with the first non-public network.

In a possible implementation, the communication apparatus is an access management network element used in the first non-public network, or a chip in the access management network element used in the first non-public network.

For example, when the communication apparatus is a chip or a chip system in the access management network element, the processing unit may be a processor, and the communication unit may be a communication interface. For example, the communication interface may be an input/output interface, a pin, or a circuit. The processing unit executes instructions stored in a storage unit, to enable the access management network element to implement the network access method according to any one of the seventh aspect or the possible implementations of the seventh aspect. The storage unit may be a storage unit (for example, a register or a cache) in the chip, or may be a storage unit (for example, a read-only memory or a random access memory) that is in the access management network element and that is outside the chip.

According to a fifteenth aspect, an embodiment of this application provides a computer-readable storage medium. The computer-readable storage medium stores a computer program or instructions. When the computer program or the instructions are run on a computer, the computer is enabled to perform the network access method according to any one of the first aspect or the possible implementations of the first aspect.

According to a sixteenth aspect, an embodiment of this application provides a computer-readable storage medium. The computer-readable storage medium stores a computer program or instructions. When the computer program or the instructions are run on a computer, the computer is enabled to perform the network access method according to any one of the second aspect or the possible implementations of the second aspect.

According to a seventeenth aspect, an embodiment of this application provides a computer-readable storage medium. The computer-readable storage medium stores a computer program or instructions. When the computer program or the instructions are run on a computer, the computer is enabled to perform the network access method according to any one of the third aspect or the possible implementations of the third aspect.

According to an eighteenth aspect, an embodiment of this application provides a computer-readable storage medium. The computer-readable storage medium stores a computer program or instructions. When the computer program or the instructions are run on a computer, the computer is enabled to perform the network access method according to any one of the fourth aspect or the possible implementations of the fourth aspect.

According to a nineteenth aspect, an embodiment of this application provides a computer-readable storage medium. The computer-readable storage medium stores a computer program or instructions. When the computer program or the instructions are run on a computer, the computer is enabled to perform the network access method according to any one of the fifth aspect or the possible implementations of the fifth aspect.

According to a twentieth aspect, an embodiment of this application provides a computer-readable storage medium. The computer-readable storage medium stores a computer program or instructions. When the computer program or the instructions are run on a computer, the computer is enabled to perform the network access method according to any one of the sixth aspect or the possible implementations of the sixth aspect.

According to a twenty-first aspect, an embodiment of this application provides a computer-readable storage medium. The computer-readable storage medium stores a computer program or instructions. When the computer program or the instructions are run on a computer, the computer is enabled to perform the network access method according to any one of the seventh aspect or the possible implementations of the seventh aspect.

According to a twenty-second aspect, an embodiment of this application provides a computer program product including instructions. When the instructions are run on a computer, the computer is enabled to perform the network access method according to the first aspect or the possible implementations of the first aspect.

According to a twenty-third aspect, an embodiment of this application provides a computer program product including instructions. When the instructions are run on a computer, the computer is enabled to perform the network access method according to the second aspect or the possible implementations of the second aspect.

According to a twenty-fourth aspect, an embodiment of this application provides a computer program product including instructions. When the instructions are run on a computer, the computer is enabled to perform the network access method according to the third aspect or the possible implementations of the third aspect.

According to a twenty-fifth aspect, an embodiment of this application provides a computer program product including instructions. When the instructions are run on a computer, the computer is enabled to perform the network access method according to the fourth aspect or the possible implementations of the fourth aspect.

According to a twenty-sixth aspect, an embodiment of this application provides a computer program product including instructions. When the instructions are run on a computer, the computer is enabled to perform the network access method according to the fifth aspect or the possible implementations of the fifth aspect.

According to a twenty-seventh aspect, an embodiment of this application provides a computer program product including instructions. When the instructions are run on a computer, the computer is enabled to perform the network access method according to the sixth aspect or the possible implementations of the sixth aspect.

According to a twenty-eighth aspect, an embodiment of this application provides a computer program product including instructions. When the instructions are run on a computer, the computer is enabled to perform the network access method according to the seventh aspect or the possible implementations of the seventh aspect.

According to a twenty-ninth aspect, an embodiment of this application provides a communication apparatus, configured to implement the methods according to the possible designs of any one of the first aspect to the seventh aspect. The communication apparatus may be the foregoing first terminal, an apparatus including the first terminal, or a component (for example, a chip) used in the first terminal. Alternatively, the communication apparatus may be the foregoing access management network element, an apparatus including the access management network element, or a component (for example, a chip) used in the access management network element. The communication apparatus may be the foregoing unified data management network element, an apparatus including the unified data management network element, or a component (for example, a chip) used in the unified data management network element. Alternatively, the communication apparatus may be the foregoing access network device, an apparatus including the access network device, or a component (for example, a chip) used in the access network device. Alternatively, the communication apparatus may be the foregoing second terminal, an apparatus including the second terminal, or a component (for example, a chip) used in the second terminal. The communication apparatus includes a corresponding module or unit for implementing the foregoing methods. The module or unit may be implemented by using hardware or software, or implemented by executing corresponding software by hardware. The hardware or the software includes one or more modules or units corresponding to the foregoing functions.

According to a thirtieth aspect, an embodiment of this application provides a communication apparatus. The communication apparatus includes at least one processor and a communication interface. When the communication apparatus runs, the processor executes computer-executable instructions or a program stored in the communication apparatus, so that the communication apparatus is enabled to perform the method according to any possible design of any one of the first aspect, the second aspect, the third aspect, the fourth aspect, the fifth aspect, the sixth aspect, or the seventh aspect. For example, the communication apparatus may be a first terminal, or a component used in the first terminal. For example, the communication apparatus may be an access management network element, or a component used in the access management network element. For example, the communication apparatus is a second terminal, or a component used in the second terminal. For example, the communication apparatus may be a unified data management network element, or a component used in the unified data management network element. For example, the communication apparatus is an access network device, or a component used in the access network device.

It should be understood that the communication apparatus described in the thirtieth aspect may further include a bus and a memory. The memory is configured to store code and data. Optionally, the at least one processor, the communication interface, and the memory are coupled to each other.

According to a thirty-first aspect, an embodiment of this application provides a communication apparatus. The communication apparatus includes at least one processor. The at least one processor is coupled to a memory. When the communication apparatus runs, the processor executes computer-executable instructions or a program stored in the memory, so that the communication apparatus is enabled to perform the method according to any one of the first aspect or the possible designs of the first aspect. For example, the communication apparatus may be a first terminal, or a chip used in the first terminal.

According to a thirty-second aspect, an embodiment of this application provides a communication apparatus. The communication apparatus includes at least one processor. The at least one processor is coupled to a memory. When the communication apparatus runs, the processor executes computer-executable instructions or a program stored in the memory, so that the communication apparatus is enabled to perform the method according to any one of the second aspect or the possible designs of the second aspect. For example, the communication apparatus may be an access management network element, or a chip used in the access management network element.

According to a thirty-third aspect, an embodiment of this application provides a communication apparatus. The communication apparatus includes at least one processor. The at least one processor is coupled to a memory. When the communication apparatus runs, the processor executes computer-executable instructions or a program stored in the memory, so that the communication apparatus is enabled to perform the method according to any one of the third aspect or the possible designs of the third aspect. For example, the communication apparatus may be a unified data management network element, or a chip used in the unified data management network element.

According to a thirty-fourth aspect, an embodiment of this application provides a communication apparatus. The communication apparatus includes at least one processor. The at least one processor is coupled to a memory. When the communication apparatus runs, the processor executes computer-executable instructions or a program stored in the memory, so that the communication apparatus is enabled to perform the method according to any one of the fourth aspect or the possible designs of the fourth aspect. For example, the communication apparatus may be a second terminal, or a chip used in the second terminal.

According to a thirty-fifth aspect, an embodiment of this application provides a communication apparatus. The communication apparatus includes at least one processor. The at least one processor is coupled to a memory. When the communication apparatus runs, the processor executes computer-executable instructions or a program stored in the memory, so that the communication apparatus is enabled to perform the method according to any one of the fifth aspect or the possible designs of the fifth aspect. For example, the communication apparatus may be an access network device, or a chip used in the access network device.

According to a thirty-sixth aspect, an embodiment of this application provides a communication apparatus. The communication apparatus includes at least one processor. The at least one processor is coupled to a memory. When the communication apparatus runs, the processor executes computer-executable instructions or a program stored in the memory, so that the communication apparatus is enabled to perform the method according to any one of the sixth aspect or the possible designs of the sixth aspect. For example, the communication apparatus may be a second terminal, or a chip used in the second terminal.

According to a thirty-seventh aspect, an embodiment of this application provides a communication apparatus. The communication apparatus includes at least one processor. The at least one processor is coupled to a memory. When the communication apparatus runs, the processor executes computer-executable instructions or a program stored in the memory, so that the communication apparatus is enabled to perform the method according to any one of the seventh aspect or the possible designs of the seventh aspect. For example, the communication apparatus may be an access management network element, or a chip used in the access management network element.

It should be understood that the memory described in any one of the thirty-first aspect to the thirty-seventh aspect may alternatively be replaced with a storage medium. This is not limited in embodiments of this application. In a possible implementation, the memory described in any one of the thirty-first aspect to the thirty-seventh aspect may be a memory inside the communication apparatus. Certainly, the memory may alternatively be located outside the communication apparatus, but the at least one processor may still execute the computer-executable instructions or the program stored in the memory.

According to a thirty-eighth aspect, an embodiment of this application provides a communication apparatus. The communication apparatus includes one or more modules, configured to implement the method according to any one of the first aspect, the second aspect, the third aspect, the fourth aspect, the fifth aspect, the sixth aspect, or the seventh aspect. The one or more modules may correspond to the steps in the method according to any one of the first aspect, the second aspect, the third aspect, the fourth aspect, the fifth aspect, the sixth aspect, or the seventh aspect.

According to a thirty-ninth aspect, an embodiment of this application provides a chip. The chip includes a processor and a communication interface. The communication interface is coupled to the processor. The processor is configured to run a computer program or instructions, to implement the network access method according to the first aspect or the possible implementations of the first aspect. The communication interface is configured to communicate with another module outside the chip.

According to a fortieth aspect, an embodiment of this application provides a chip. The chip includes a processor and a communication interface. The communication interface is coupled to the processor. The processor is configured to run a computer program or instructions, to implement the network access method according to the second aspect or the possible implementations of the second aspect. The communication interface is configured to communicate with another module outside the chip.

According to a forty-first aspect, an embodiment of this application provides a chip. The chip includes a processor and a communication interface. The communication interface is coupled to the processor. The processor is configured to run a computer program or instructions, to implement the network access method according to the third aspect or the possible implementations of the third aspect. The communication interface is configured to communicate with another module outside the chip.

According to a forty-second aspect, an embodiment of this application provides a chip. The chip includes a processor and a communication interface. The communication interface is coupled to the processor. The processor is configured to run a computer program or instructions, to implement the network access method according to the fourth aspect or the possible implementations of the fourth aspect. The communication interface is configured to communicate with another module outside the chip.

According to a forty-third aspect, an embodiment of this application provides a chip. The chip includes a processor and a communication interface. The communication interface is coupled to the processor. The processor is configured to run a computer program or instructions, to implement the network access method according to the fifth aspect or the possible implementations of the fifth aspect. The communication interface is configured to communicate with another module outside the chip.

According to a forty-fourth aspect, an embodiment of this application provides a chip. The chip includes a processor and a communication interface. The communication interface is coupled to the processor. The processor is configured to run a computer program or instructions, to implement the network access method according to the sixth aspect or the possible implementations of the sixth aspect. The communication interface is configured to communicate with another module outside the chip.

According to a forty-fifth aspect, an embodiment of this application provides a chip. The chip includes a processor and a communication interface. The communication interface is coupled to the processor. The processor is configured to run a computer program or instructions, to implement the network access method according to the seventh aspect or the possible implementations of the seventh aspect. The communication interface is configured to communicate with another module outside the chip.

Specifically, the chip provided in embodiments of this application further includes a memory, configured to store the computer program or the instructions.

According to a forty-sixth aspect, an embodiment of this application provides a communication system. The communication system includes the communication apparatus according to any one of the ninth aspect or the possible implementations of the ninth aspect and the communication apparatus according to any one of the tenth aspect or the possible implementations of the tenth aspect.

In a possible implementation, the communication system may further include the communication apparatus according to any one of the eighth aspect or the possible implementations of the eighth aspect.

According to a forty-seventh aspect, an embodiment of this application provides a communication system. The communication system includes the communication apparatus according to any one of the eleventh aspect or the possible implementations of the eleventh aspect and the communication apparatus according to any one of the twelfth aspect or the possible implementations of the twelfth aspect.

According to a forty-eighth aspect, an embodiment of this application provides a communication system. The communication system includes the communication apparatus according to any one of the thirteenth aspect or the possible implementations of the thirteenth aspect and the communication apparatus according to any one of the fourteenth aspect or the possible implementations of the fourteenth aspect.

Any apparatus, computer storage medium, computer program product, chip, or communication system provided above is configured to perform the corresponding method provided above. Therefore, for beneficial effects that can be achieved by the apparatus, computer storage medium, computer program product, chip, or communication system provided above, refer to the beneficial effects of the corresponding solution in the corresponding method provided above. Details are not described herein again.

### BRIEF DESCRIPTION OF DRAWINGS

FIG. 1 is a schematic diagram of architectures of a public network integrated NPN and a standalone NPN according to an embodiment of this application;
FIG. 2 is a schematic diagram of an architecture of a public network or a non-public network according to an embodiment of this application;
FIG. 3 is a diagram of an architecture of a communication system to which a network access method is applicable according to an embodiment of this application;
FIG. 4 is a diagram of an architecture of a 5G network according to an embodiment of this application;
FIG. 5a is a schematic diagram of an architecture in which a non-public network and a public network are interworked based on an N3IWF according to an embodiment of this application;
FIG. 5b is a schematic diagram of an architecture in which a non-public network and a public network are interworked based on a roaming architecture according to an embodiment of this application;
FIG. 6 is a first schematic flowchart of a network access method according to an embodiment of this application;
FIG. 7 is a second schematic flowchart of a network access method according to an embodiment of this application;
FIG. 8 is a third schematic flowchart of a network access method according to an embodiment of this application;
FIG. 9 is a fourth schematic flowchart of a network access method according to an embodiment of this application;
FIG. 10 is a tenth schematic flowchart of a network access method according to an embodiment of this application;
FIG. 11 is a first schematic flowchart of a specific embodiment of a network access method according to an embodiment of this application;
FIG. 12 is a second schematic flowchart of a specific embodiment of a network access method according to an embodiment of this application;
FIG. 13 is a third schematic flowchart of a specific embodiment of a network access method according to an embodiment of this application;
FIG. 14 is a fourth schematic flowchart of a specific embodiment of a network access method according to an embodiment of this application;
FIG. 15 is a fifth schematic flowchart of a specific embodiment of a network access method according to an embodiment of this application;
FIG. 16 is a sixth schematic flowchart of a specific embodiment of a network access method according to an embodiment of this application;
FIG. 17 is a schematic diagram of a structure of a communication apparatus according to an embodiment of this application;
FIG. 18 is a schematic diagram of a structure of another communication apparatus according to an embodiment of this application; and
FIG. 19 is a schematic diagram of a structure of a chip according to an embodiment of this application.

### DETAILED DESCRIPTION OF EMBODIMENTS

To clearly describe technical solutions in embodiments of this application, terms such as "first" and "second" are used in embodiments of this application to distinguish between same items or similar items that have basically same functions or purposes. For example, a first terminal and a second terminal are merely intended to distinguish between different terminals, and are not intended to limit a sequence thereof. A person skilled in the art may understand that the terms such as "first" and "second" do not limit a quantity and an execution sequence, and the terms such as "first" and "second" do not indicate a definite difference either.

It should be noted that, in this application, the term such as "example" or "for example" is used to represent giving an example, an illustration, or a description. Any embodiment or design scheme described as an "example" or "for example" in this application should not be explained as being more preferred or having more advantages than another embodiment or design scheme. Exactly, use of the term such as "example" or "for example" is intended to present a related concept in a specific manner.

A network architecture and a service scenario described in embodiments of this application are intended to describe the technical solutions in embodiments of this application more clearly, and do not constitute a limitation on the technical solutions provided in embodiments of this application. A person of ordinary skill in the art may know: With evolution of the network architecture and emergence of new service scenarios, the technical solutions provided in embodiments of this application are also applicable to similar technical problems.

In this application, "at least one" refers to one or more, and "a plurality of" refers to two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

Steps in a network access method provided in embodiments of this application are merely examples. Not all the steps are mandatory, or not all content in each piece of information or each message is mandatory. A step or content may be added or reduced as required in a use process.

A same step or steps or messages having a same function in embodiments of this application may be mutually referenced in different embodiments.

A system architecture and a service scenario described in embodiments of this application are intended to describe the technical solutions in embodiments of this application more clearly, and do not constitute a limitation on the technical solutions provided in embodiments of this application. A person of ordinary skill in the art may know: With evolution of the network architecture and emergence of new service scenarios, the technical solutions provided in embodiments of this application are also applicable to similar technical problems. In embodiments of this application, an example in which the provided method is applied to an NR system or a 5th generation mobile communication technology (5th generation mobile networks or 5th generation wireless systems, 5th-Generation, 5G) network is used for description.

Before embodiments of this application are described, related terms in embodiments of this application are first explained as follows:

(1) A public network refers to a network established and operated to provide land mobile communication services for the public, that is, a conventional operator network. The land mobile communication services include, but are not limited to, a mobile phone communication service. For example, the public network may be a public land mobile network (public land mobile network, PLMN).

(2) A non-public network (Non-public network, NPN) is a non-public 5G network, and is a communication network that can be used by some private users. For example, the non-public network may include an industrial communication network, an enterprise private network, and the like. A typical service range of the industrial communication network is usually one or more industrial parks, and a service range of the enterprise private network is usually all users in an enterprise. In other words, the non-public network serves only devices managed or owned by an industrial communication network or an enterprise private network, and provides network communication services such as data connection for these devices.

For example, if a non-public network provides communication services for an industrial park, the non-public network may provide a communication service for a terminal that is located in the industrial park and that has a capability and permission to access the non-public network.

The non-public network in embodiments of this application may also be referred to as a private network or a dedicated network. This is uniformly described herein, and details are not described subsequently.

The non-public network may include: a public network integrated NPN (public network integrated NPN, PNI-NPN) and a standalone NPN (standalone NPN, SNPN). The public network integrated NPN may be implemented dependent on support of a PLMN, and the SNPN may be implemented independent of a network function of a PLMN.

The public network integrated NPN may be implemented using a network slice in the PLMN. To prevent an unauthorized terminal from attempting to access and select the PNI-NPN, a closed access group (closed access group, CAG) function is additionally used. A CAG is used to identify a group of terminals. The group of terminals that can be identified by using the CAG are allowed to access a cell (a CAG cell) associated with the CAG. To prevent a terminal that is not allowed to access the CAG cell from automatically selecting and accessing the CAG cell, the CAG cell broadcasts one or more CAG identifiers, and a terminal is configured with an available CAG list (list) and an indication (where the indication is used to indicate whether the terminal is allowed to access a 5G system (5G System, 5GS) through only a CAG cell). A unified data management network element has subscription data of the terminal, and the subscription data of the terminal includes the available CAG list and the indication of the terminal.

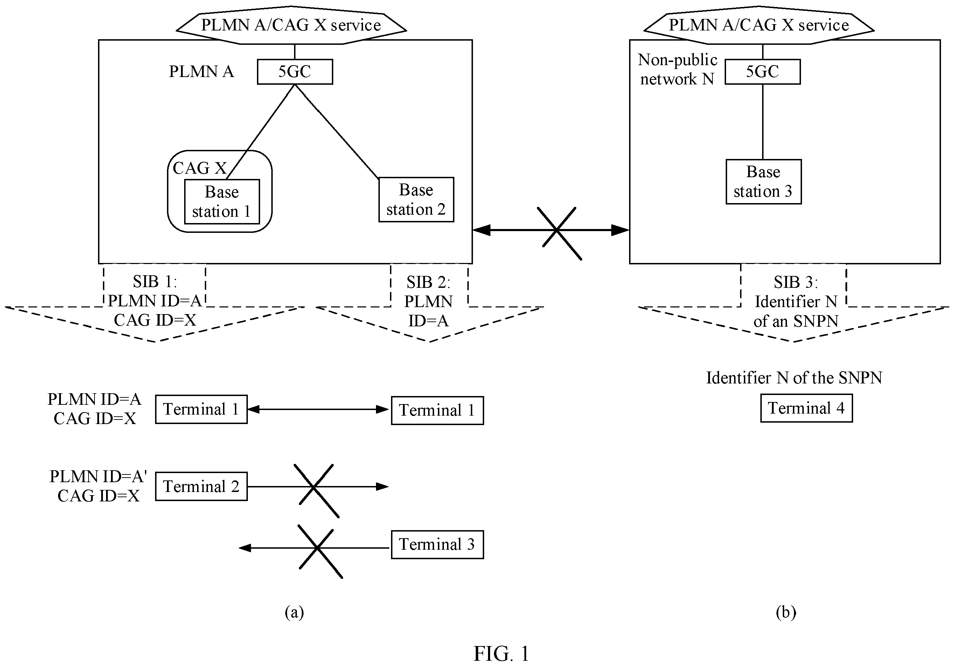

As shown in (a) in FIG. 1, a public network integrated NPN is used as an example in (a) in FIG. 1. A base station 1 sends a system information block (system information block, SIB) 1, where the SIB 1 includes a PLMN ID=A and a CAG identifier=X. A base station 2 sends a SIB 2, where the SIB 2 includes the PLMN ID=A. A terminal 1 has the PLMN ID=A and the CAG identifier=X. A terminal 2 has the PLMN ID=A, the CAG identifier=X, and an indication indicating that the terminal 2 can access a 5G system through only a CAG cell. A terminal 3 has the PLMN ID=A. In this case, the terminal 1 can access both the base station 1 and the base station 2; the terminal 2 can access the base station 1, but cannot access the base station 2; the terminal 3 can access the base station 2, but cannot access the base station 1.

As shown in (b) in FIG. 1, a standalone NPN is used as an example in (b) in FIG. 1. The SNPN (a 5G network) is independently deployed and does not depend on a PLMN. The SNPN is identified by using a PLMN ID and a NID. The PLMN ID may be an inherent value reserved by a third-party operator, or may be a specific value of a PLMN operator deploying the SNPN. In the SNPN, a base station 3 in the SNPN sends a SIB 3, where the SIB 3 includes an identifier N (for example, the PLMN ID and a NID 1) of the SNPN. A terminal 4 selects a to-be-accessed NPN network based on broadcast information and configured network selection information. If the terminal 4 finds that the configured network selection information (a PLMN ID and a NID 2) is different from the PLMN ID broadcast by the base station 3 or is different from the PLMN ID and the NID 1 that are broadcast by the base station 3, the terminal 4 does not choose to access the SNPN. If the terminal 4 finds that the configured network selection information (the PLMN ID and the NID 1) is the same as the PLMN ID broadcast by the base station 3 or is the same as the PLMN ID and the NID 1 that are broadcast by the base station 3, the terminal 4 chooses to access the SNPN.

An architecture described in (a) in FIG. 1 and an architecture described in (b) in FIG. 1 do not support handover. The base station 1, the base station 2, and the base station 3 may be base stations in 5G networks. For example, the base station 1, the base station 2, and the base station 3 each may be a next generation NodeB (next Generation NodeB, gNB). In (a) in FIG. 1, that the base station 1 and the base station 2 access a same 5G core network (5G Core, 5GC) is used as an example. The base station 2 accesses a 5GC corresponding to the non-public network.

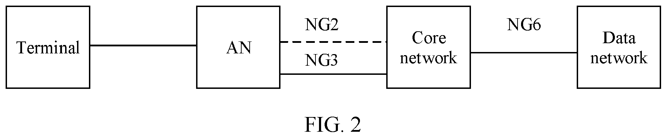

FIG. 2 shows composition of a public network or a non-public network. The public network or the non-public network includes a terminal, an access network (access network, AN), a core network (Core), and a data network (data network, DN). The terminal, the AN, and the Core are main components of an architecture. Logically, the terminal, the AN, and the Core each may be divided into two parts: a user plane and a control plane. The control plane is responsible for mobile network management, and the user plane is responsible for service data transmission. In FIG. 2, an NG2 reference point is between a control plane of the AN and a control plane of the Core, an NG3 reference point is between a user plane of the AN and a user plane of the Core, and an NG6 reference point is between the user plane of the Core and the data network.

The terminal is an ingress for interaction between a mobile user and the network, and is capable of providing a basic computing capability and a storage capability, displaying a service window to the user, and receiving an operation input of the user. A terminal in a 5G network may use a new radio technology to establish a signal connection and a data connection to an AN, so as to transmit a control signal and service data to a mobile network.

The AN is similar to a base station in a conventional network, is deployed near a terminal, and provides a network access function for an authorized terminal in a specific area. The AN can determine transmission tunnels with different quality based on levels of terminals, service requirements, and the like, to transmit data of the terminals. The AN can manage resources of the AN, properly use the resources, and provide an access service for the terminal as required, and is responsible for forwarding a control signal and terminal data between the terminal and the core network.

The Core is responsible for maintaining subscription data of a mobile network, managing a network element in the mobile network, and providing functions such as session management, mobility management, policy management, and security authentication for the terminal. In an attach procedure of the terminal, the Core provides network access authentication for the terminal. When the terminal has a service request, the Core allocates a network resource to the terminal. When the terminal moves, the Core updates a network resource for the terminal. When the terminal is idle, the Core provides a fast recovery mechanism for the terminal. In a detach procedure of the terminal, the Core releases a network resource for the terminal. When the terminal has service data, the Core provides a data routing function for the terminal, for example, forwards uplink data to the data network, or receives downlink data for the terminal from the data network. The Core sends the received downlink data for the terminal to the AN, so that the AN sends the downlink data for the terminal to the terminal.

The data network is a data network that provides a service for the user. Usually, a client is located in the terminal, and a server is located in the data network. The data network may be a private network, for example, a local area network; an external network that is not managed and controlled by an operator, for example, the Internet (Internet); or a dedicated network jointly deployed by operators, for example, a network that provides an IP multimedia subsystem (IP multimedia core network subsystem, IMS) service.

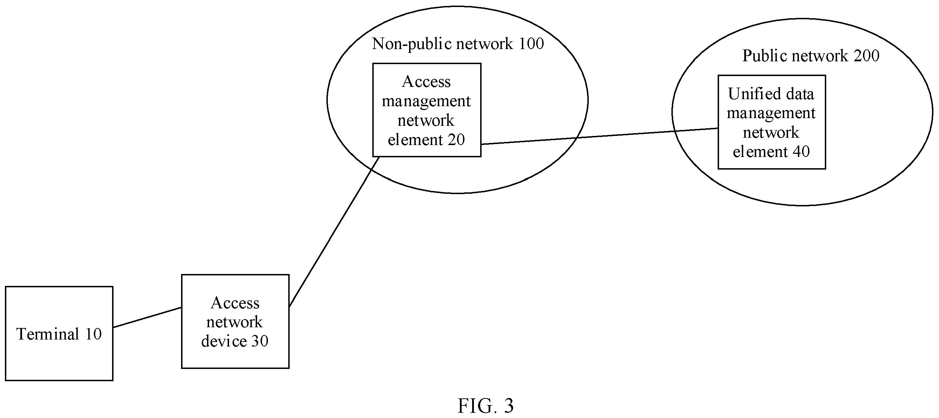

In conclusion, FIG. 2 describes the main components of the non-public network or the public network. FIG. 3 shows a communication system to which a network access method in this application is applicable. The communication system includes a terminal 10 and an access management network element 20. The access management network element 20 is a network element in a non-public network 100.

The terminal 10 may access the non-public network 100 through an access network device 30 and the access management network element 20 that are in the non-public network 100.

In embodiments of this application, the terminal 10 may be distributed in a wireless network, and each terminal may be static or mobile.

In a possible implementation, the communication system may further include a unified data management network element 40. The unified data management network element 40 is a network element in a public network 200. The public network 200 and the non-public network 100 are interworked. After the terminal 10 successfully accesses the non-public network 100, the terminal 10 may access the public network 200 through the non-public network 100.

In embodiments of this application, the communication system shown in FIG. 3 may be applied to a current 5G network architecture or another future network architecture. This is not limited in embodiments of this application.

The following uses an example in which the communication system shown in FIG. 3 is applicable to a 5G network, in other words, both the non-public network 100 and the public network 200 are 5G networks. A network element or an entity corresponding to the access management network element 20 may be an access and mobility management function (access and mobility management function, AMF) network element shown in FIG. 3. A network element or an entity corresponding to the unified data management network element 40 may be a unified data management (unified data management, UDM) network element. A network element or an entity corresponding to the access network device 30 may be a (radio) access network ((radio) access network, (R)AN) device.

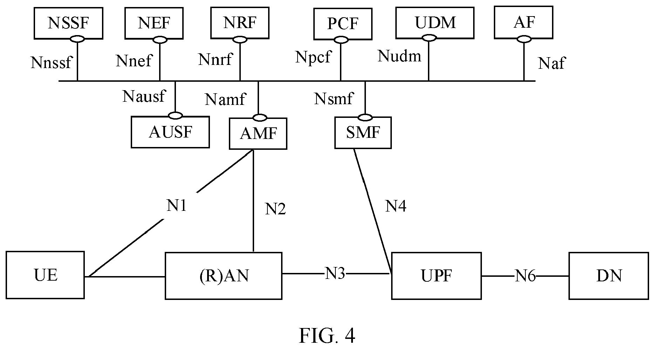

As shown in FIG. 4, the non-public network 100 or the public network 200 may further include a session management function (session management function, SMF) network element, a policy control function (policy control function, PCF) network element, a network slice selection function (network slice selection function, NSSF) network element, an authentication server function (authentication server function, AUSF) network element, a network exposure function (network exposure function, NEF) network element, a network repository function (network repository function, NRF) network element, an application function (application function, AF) network element, and the like. This is not specifically limited in embodiments of this application.

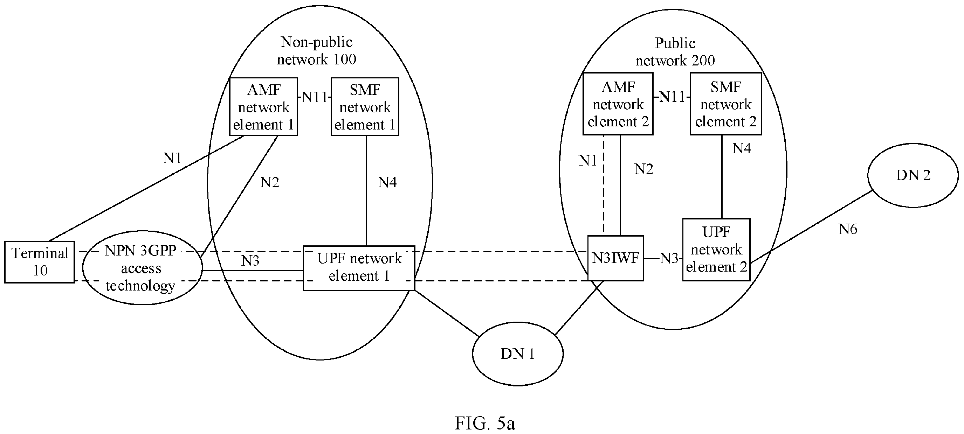

As shown in FIG. 5a, the non-public network 100 or the public network 200 may further communicate with a data network (data network, DN), and the DN may be managed by the AF network element.

The terminal accesses the network (the non-public network or the public network) through the (R)AN device, and the terminal communicates with the AMF network element through an N1 interface (N1 for short). The SMF network element communicates with one or more UPF network elements through an N4 interface (N4 for short). The UPF network element communicates with the DN through an N6 interface (N6 for short). The (R)AN device communicates with the AMF network element through an N2 interface (N2 for short). The (R)AN device communicates with the UPF network element through an N3 interface (N3 for short). Control plane network elements may also interact with each other through a service-oriented interface. For example, as shown in FIG. 4, the AMF network element, the SMF network element, the UDM network element, and the PCF network element interact with each other through a service-oriented interface. For example, an external service-oriented interface provided by the AMF network element may be Namf. An external service-oriented interface provided by the SMF network element may be Nsmf. An external service-oriented interface provided by the UDM network element may be Nudm. An external service-oriented interface provided by the PCF network element may be Npcf. An external service-oriented interface provided by the NSSF network element may be Nnssf. An external service-oriented interface provided by the NEF network element may be Nnef. An external service-oriented interface provided by the AF network element may be Naf. It should be understood that, for related descriptions of names of various service-oriented interfaces, refer to a diagram of a 5G system architecture (5G system architecture) in a current technology. Details are not described herein.

In the network architecture shown in FIG. 4, an example in which control plane network elements interact with each other through a service-oriented interface is used. Certainly, the control plane network elements may alternatively communicate with each other in the following manners: The AMF entity communicates with the SMF network element through an N11 interface (N11 for short). Any two of the one or more UPF network elements communicate with each other through an N9 interface (N9 for short). The SMF network element communicates with the PCF network element through an N7 interface (N7 for short), and the PCF network element communicates with the AF network element through an N5 interface. Any two AMF network elements communicate with each other through an N14 interface (N14 for short). The SMF network element communicates with the UDM through an N10 interface (N10 for short). The AMF network element communicates with the AUSF through an N12 interface (N12 for short). The AUSF network element communicates with the UDM network element through an N13 interface (N13 for short). The AMF network element communicates with the UDM network element through an N8 interface (N8 for short).

It should be noted that FIG. 4 merely shows an example of one UPF network element and one SMF network element. Certainly, FIG. 4 may include a plurality of UPF network elements and a plurality of SMF network elements, for example, include an SMF network element 1 and an SMF network element 2. This is not specifically limited in embodiments of this application.

It should be noted that the (R)AN device, the AMF network element, the SMF network element, the UDM network element, the UPF network element, the PCF network element, and the like in FIG. 4 are merely names, and the names do not constitute any limitation on the devices. In the 5G network and another future network, network elements or entities corresponding to the (R)AN device, the AMF network element, the SMF network element, the UDM network element, the UPF network element, and the PCF network element may alternatively have other names. This is not specifically limited in embodiments of this application. For example, the UDM network element may alternatively be replaced with a home subscriber server (home subscriber server, HSS), a user subscription database (user subscription database, USD), a database entity, or the like. This is uniformly described herein, and details are not described subsequently.

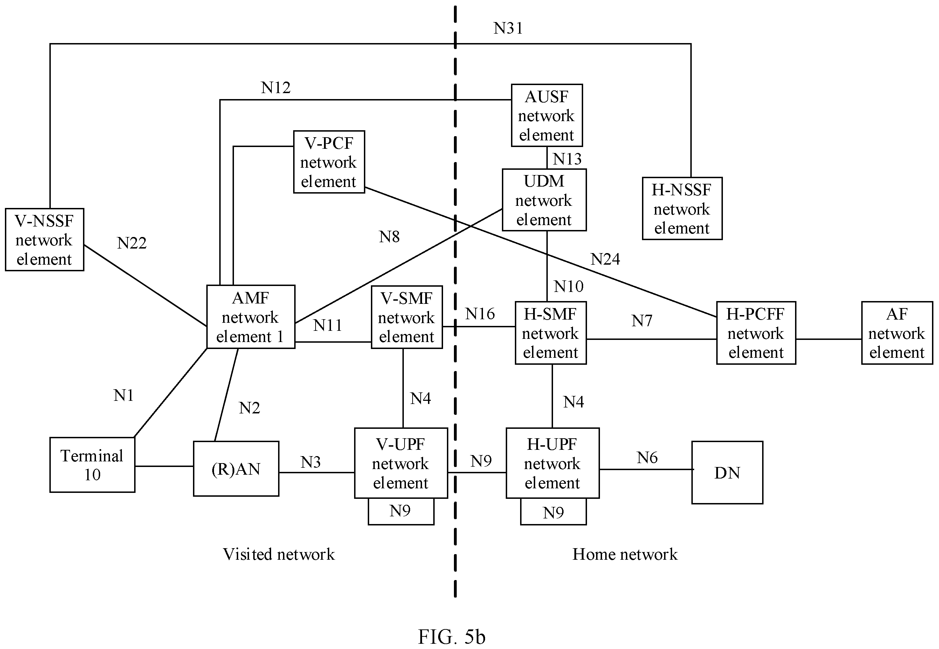

In different releases of 3rd generation partnership project (3rd generation partnership project, 3GPP), manners of interworking between a non-public network and a public network are different. Therefore, the following separately describes the manners with reference to FIG. 5a and FIG. 5b.

In a first release of 3GPP, as shown in FIG. 5a, the non-public network 100 interworks with the public network 200 by using an architecture that is based on a non-3GPP interworking function (Non-3GPP interworking function, N3IWF). In this case, the terminal 10 has two pieces of subscription information, to be specific, the terminal 10 has both private network subscription information between the terminal 10 and the non-public network 100 and first public network subscription information between the terminal 10 and the public network 200. The private network subscription information is used by the terminal 10 to access the non-public network 100. The first public network subscription information is used by the terminal 10 to access the public network 200. It should be understood that the private network subscription information between the terminal 10 and the non-public network 100 includes an identifier 1 of the terminal 10, and the identifier 1 of the terminal 10 includes an identifier of the non-public network 100. The first public network subscription information between the terminal 10 and the public network 200 includes an identifier 2 of the terminal 10, and the identifier 2 of the terminal 10 includes an identifier of the public network 200.

For example, the first release may be the release (Release, R) 16.

As shown in FIG. 5a, the terminal 10 determines the identifier of the non-public network 100 by using the private network subscription information between the terminal 10 and the non-public network 100. Then, the terminal 10 accesses an access network device deployed in the non-public network 100, and the terminal 10 performs 3GPP registration with the non-public network 100 through the access network device. The terminal 10 determines the identifier of the public network 200 by using the first public network subscription information between the terminal 10 and the public network 200. Then, the terminal 10 selects an N3IWF in the public network 200, establishes a PDU session in the non-public network 100 to access the N3IWF in the public network 200, and performs N3GPP registration with the public network 200.

Specifically, as shown in FIG. 5a, the non-public network 100 includes an AMF network element 1, an SMF network element 1, and a UPF network element 1, and the public network 200 includes an AMF network element 2, an SMF network element 2, a UPF network element 2, and the N3IWF. The N3IWF is configured to implement interworking between the non-public network 100 and the public network 200.

The terminal 10 accesses the non-public network 100 by using a 3GPP access technology (access technology) of an NPN, and then establishes a PDU session between the terminal 10 and the UPF network element 1 in the non-public network 100. Subsequently, when the terminal 10 needs to perform non-3GPP (non-3GPP, N3GPP) registration with the public network 200 through the non-public network 100, the terminal 10 may send a public network registration request message to the UPF network element 1 by using the PDU session established between the terminal 10 and the UPF network element 1. The public network registration request message is used to request to register the terminal 10 with the public network 200. Then, the UPF network element 1 sends the public network registration request message to the N3IWF through a DN 1 shown in FIG. 5a. After receiving the public network registration request message, the N3IWF may forward the public network registration request message to the AMF network element 2 in the public network 200, so that the AMF network element 2 determines, based on the public network registration request message, whether the terminal 10 is allowed to register with the public network 200. If the AMF network element 2 allows the terminal 10 to register with the public network 200, the AMF network element 2 sends a registration accept message to the N3IWF, so that the N3IWF sends the registration accept message to the UPF network element 1 in the non-public network 100 through the DN 1. After receiving the registration accept message, the UPF network element 1 may send the registration accept message to the terminal 10 by using the PDU session between the UPF network element 1 and the terminal 10. It may be understood that the DN 1 is configured to provide a service for the non-public network 100, and a DN 2 is configured to provide a service for the public network 200. To be specific, the terminal 10 may access, through the non-public network 100, a service deployed on the DN 1. To be specific, the terminal 10 may access, through the public network 200, a service deployed on the DN 2.

It should be noted that, for communication interfaces between network elements in the non-public network 100 and the public network 200 shown in FIG. 5a, refer to the descriptions in FIG. 4. Details are not described herein again. As shown in FIG. 5a, the N3IWF communicates with the DN through an N6 interface. The N3IWF communicates with the AMF network element 2 through an N2 interface in the public network.

In a second release (where the second release is an upgraded release of the first release) of 3GPP, as shown in FIG. 5, the non-public network 100 interworks with the public network 200 by using a roaming architecture. In this case, the terminal 10 has second public network subscription information between the terminal 10 and the public network 200. As shown in FIG. 5b, the terminal 10 determines an identifier of the non-public network 100 by using the second public network subscription information between the terminal 10 and the public network 200. After determining the identifier of the non-public network 100, the terminal 10 may choose to use a (R)AN device deployed in the non-public network to implement registration with the non-public network 100. Subsequently, the terminal 10 may establish a session (for example, a PDU session) in the non-public network 100, and the non-public network 100 determines, based on the second public network subscription information, that a mode of the session is a home routed (home routed, HR) mode or a local breakout (local breakout) mode. For example, the second release may be R17.

It should be understood that the second public network subscription information includes information about one or more non-public networks that the terminal 10 is allowed to access. When the terminal 10 is located in coverage of a non-public network a, the terminal 10 may receive broadcast information (including an identifier of the non-public network a) of the non-public network a. If the identifier of the non-public network a that is included in the broadcast information is the same as an identifier of a non-public network in identifiers of the one or more non-public networks, the terminal 10 may determine that the non-public network a can be selected for access.

In FIG. 5b, an example in which the roaming architecture that supports interworking between the non-public network 100 and the public network 200 is in a home routed mode is used. In FIG. 5b, the non-public network 100 of the terminal 10 (which may also be referred to as a visited network (visited network) of the terminal) includes: an AMF network element 1, a visited SMF (visited SMF, V-SMF) network element, a visited PCF (visited PCF, V-PCF) network element, the (R)AN device, a visited UPF (visited UPF, V-UPF) network element, and a visited NSSF (visited NSSF, V-NSSF) network element. The public network 200 of the terminal 10 (which may also be referred to as a home network (home network) of the terminal) includes: a home SMF (home SMF, H-SMF) network element, a home PCF (home PCF, H-PCF) network element, a home UPF (home UPF, H-UPF) network element, a UDM network element, an AUSF network element, and a home NSSF (home NSSF, H-NSSF) network element.

The H-SMF network element communicates with the V-SMF network element through an N16 interface, and the AUSF network element communicates with the AMF network element 1 through an N12 interface. The H-PCF network element communicates with the V-PCF network element through an N24 interface. The AMF network element 1 communicates with the V-NSSF network element through an N22 interface. The V-NSSF network element communicates with the H-NSSF network element through an N31 interface. The H-UPF network element communicates with the V-UPF network element through an N9 interface.

The public network 200 may further include a home security edge protection proxy (home Security edge protection proxy, H-SEPP). The non-public network 100 may further include a visited security edge protection proxy (visited Security edge protection proxy, V-SEPP). The public network 200 communicates with the non-public network 100 through the visited SEPP and the home SEPP. An N32 interface exists between the home SEPP and the visited SEPP.

In embodiments of this application, a public network may be a PLMN, and a non-public network may be an SNPN. This is uniformly described herein, and details are not described subsequently.

Functions of function entities in the core network are as follows:
The UPF network element is configured to forward a user data packet according to a routing rule of the SMF network element, for example, send uplink data to the DN or another UPF, and forward downlink data to another UPF or the RAN.

The AUSF network element is configured to perform security authentication on the terminal.

The AMF is configured to implement access management and mobility management of the terminal. The AMF is responsible for status maintenance of the terminal, reachability management of the terminal, non-mobility management (mobility management, MM), non-access stratum (Non-access stratum, NAS) message forwarding, and session management (Session Management, SM) N2 message forwarding.

The SMF network element is responsible for managing a session of the terminal, and allocating or releasing a resource for the session of the terminal, where the resource includes a session quality of service (quality of service, QoS) parameter, a session path, a forwarding rule, and the like.

The NSSF is configured to select a network slice for the terminal.

The NEF exposes a network function to a third party in a northbound application programming interface (application programming interface, API) manner.

The NRF stores and selects network function entity information for another network element.

The UDM network element is configured to store subscription information of the terminal or manage a context of the terminal.

The PCF network element is configured to manage a policy.

The AF network element is configured to manage an application.

The terminal (terminal) may include various handheld devices, vehicle-mounted devices, wearable devices, and computing devices that have a wireless communication function, or other processing devices connected to a wireless modem. The terminal may further include a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld (handheld) device, a laptop computer (laptop computer), a cordless phone (cordless phone), a wireless local loop (wireless local loop, WLL) station, a machine type communication (machine type communication, MTC) terminal, user equipment (user equipment, UE), a mobile station (mobile station, MS), a terminal device (terminal device), relay user equipment, or the like. The relay user equipment may be, for example, a 5G residential gateway (residential gateway, RG). For ease of description, in this application, the devices mentioned above are collectively referred to as terminals.

It should be understood that the terminal in embodiments of this application may be a terminal device in an internet of things or a terminal in a plurality of vertical industry application fields such as a port, an intelligent factory, railway transportation, logistics, an uncrewed aerial vehicle, and a driverless car, for example, a mobile robot (Mobile Robot), an automated guided vehicle (Automated Guided Vehicle, AGV), a driverless car, a control device and a sensor on a train, or a control device and a sensor (Sensor) deployed in a factory.

For example, in embodiments of this application, the terminal may alternatively be a wearable device. The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. Generalized wearable intelligent devices include full-featured and large-size devices that can implement all or some functions without depending on smartphones, such as smart watches or smart glasses, and devices that focus on only one type of application function and need to work with other devices such as smartphones, such as various smart bands or smart jewelry for monitoring physical signs. The terminal may alternatively be a sensor device used in a factory.

The access network device is configured to provide a network access function for an authorized terminal in a specific area, and can use transmission tunnels with different quality based on levels of terminals, service requirements, and the like. The access network device can manage radio resources, provide an access service for the terminal, and further complete forwarding of a control signal and terminal data between the terminal and the core network. The access network device may also be understood as a base station in a conventional network. For example, the access network device may be responsible for functions such as radio resource management, quality of service (quality of service, QoS) management, and data compression and encryption on an air interface side.

In embodiments of this application, a specific structure of an execution body of the network access method is not particularly limited in embodiments of this application, provided that communication can be performed according to the network access method in embodiments of this application by running a program that records code of the network access method in embodiments of this application. For example, the network access method provided in embodiments of this application may be performed by a functional module that is in a first terminal and that can invoke and execute the program, or may be a communication apparatus, for example, a chip, used in the first terminal. The network access method provided in embodiments of this application may be performed by a functional module that is in an access management network element and that can invoke and execute the program, or may be a communication apparatus, for example, a chip, used in the access management network element. This is not limited in this application. The network access method provided in embodiments of this application may be performed by a functional module that is in a unified data management network element and that can invoke and execute the program, or may be a communication apparatus, for example, a chip, used in the unified data management network element. This is not limited in this application. The following embodiments are described by using an example in which the network access method is performed by the first terminal, the access management network element, and the unified data management network element.

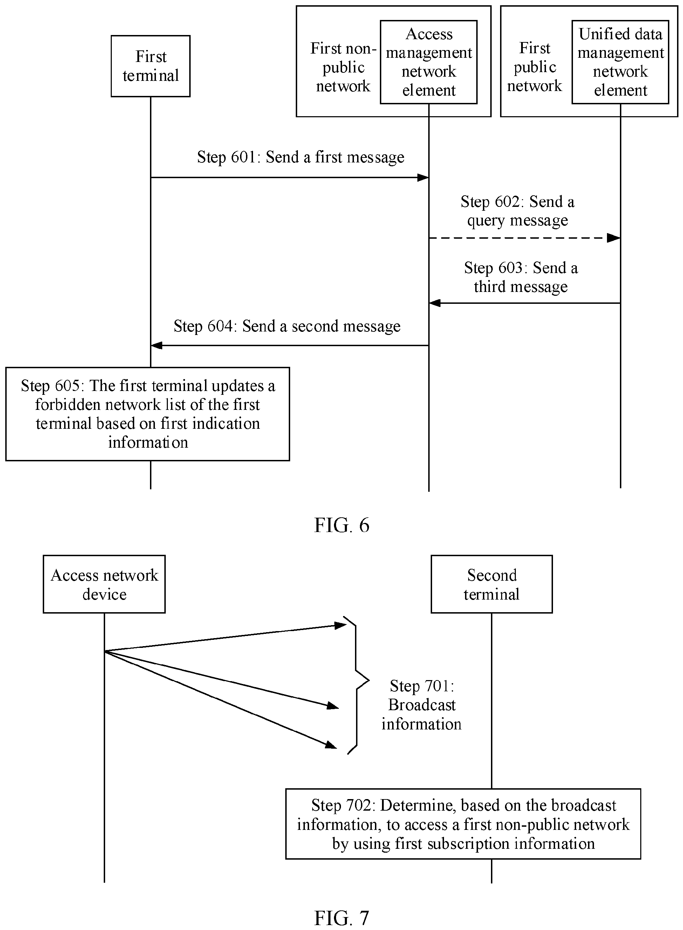

FIG. 6 shows an interaction embodiment of a network access method according to an embodiment of this application. The method includes the following steps.

Step 601: A first terminal sends a first message to an access management network element in a first non-public network. Correspondingly, the access management network element in the first non-public network receives the first message from the first terminal. The first message is used to request to register the first terminal with the first non-public network.

It should be understood that the first terminal is located in coverage of the first non-public network. It should be understood that the first terminal may detect one or more candidate non-public networks, and the first non-public network may be any non-public network in the one or more candidate non-public networks. Certainly, the first non-public network may be a candidate non-public network with strongest signal quality in the one or more candidate non-public networks.

For example, the access management network element may be the access management network element 20 shown in FIG. 2. The first non-public network may be the non-public network 100 in FIG. 2.

The first terminal in this embodiment of this application does not have permission or a capability to access a non-public network. Certainly, the first terminal may have permission or a capability to access a public network. This is not limited in this embodiment of this application.

It should be noted that, in an aspect, "non-public network" in "the first terminal does not have permission to access a non-public network" may refer to a non-public network in general. In other words, the first terminal does not have permission to access any non-public network. For example, regardless of whether the non-public network is a non-public network 1 or a non-public network 2, the first terminal cannot access the non-public network. In another aspect, "non-public network" in "the first terminal does not have permission to access a non-public network" may refer to a specific non-public network. In other words, the first terminal only cannot access the specific non-public network (for example, the specific non-public network is the first non-public network), but the first terminal may access a non-public network other than the first non-public network. For example, the first non-public network is a non-public network 1. Although the first terminal does not have a function of accessing the non-public network 1, the first terminal has a function of accessing a non-public network 2.

For example, the first terminal is specially configured to access the non-public network 2 that serves a factory 1, and when the first terminal is located in coverage of the non-public network 1 that serves a factory 2, the first terminal does not have permission to access the non-public network 1.

In a possible implementation, the first message may further carry an identifier of the first terminal. The identifier of the first terminal is used to identify the first terminal. For example, the identifier of the first terminal may be one or more of the following: a subscription permanent identifier (subscription permanent identifier, SUPI) and a subscriber concealed identifier (subscriber concealed identifier, SUCI). For an identifier of a terminal in the following embodiments, refer to the description herein. Details are not described subsequently again.

In a specific implementation, step 601 in this embodiment of this application may be implemented in the following manner: The first terminal sends the first message to the access management network element in the first non-public network through an access network device in the first non-public network. Correspondingly, the access management network element in the first non-public network receives the first message from the first terminal through the access network device in the first non-public network. It may be understood that the access management network element may further obtain information about the first non-public network from the access network device in the first non-public network. For example, the information about the first non-public network is used to identify the non-public network. For example, the information about the first non-public network may be an identifier of the first non-public network. For example, the information about the first non-public network is the identifier of the first non-public network. In this case, the identifier of the first non-public network is determined based on an identifier of a target public network and a NID.

The target public network in this embodiment of this application is a public network corresponding to the first non-public network. For example, the target public network is a public network of an operator A. If an identifier of the target public network that is allocated by the operator A to the target public network is "00000", and a NID is "0001", the identifier of the first non-public network includes "000000001". In other words, the identifier of the target public network is a specific value allocated by an operator deploying the first non-public network to the target public network. Alternatively, the identifier of the target public network is an inherent value reserved by a third-party operator for the target public network. This is not limited in this embodiment of this application.

For example, the first message may be a registration request message.

Step 602: The access management network element sends a query message to a unified data management network element in a first public network. Correspondingly, the unified data management network element in the first public network receives the query message from the access management network element in the non-public network. The query message is used to query for subscription data of the first terminal.

The first public network interworks with the first non-public network. In other words, the first non-public network described in step 601 to step 605 is a non-public network that interworks with the first public network.

For example, the query message may carry the identifier of the first terminal and the information about the first non-public network.

For example, the first public network may be the public network 200 shown in FIG. 2. The unified data management network element may be the unified data management network element 40 in FIG. 2.

Step 603: The unified data management network element sends a third message to the access management network element. Correspondingly, the access management network element obtains the third message from the unified data management network element in the first public network. The third message includes one or more of the following: the subscription data of the first terminal and a cause value.

The subscription data includes second indication information. In an aspect, the second indication information is used to indicate that the first terminal can access only a public network. Alternatively, in another aspect, the second indication information is used to indicate that the first terminal cannot access a non-public network. The cause value indicates that the first terminal is not allowed to access the first non-public network.

It should be noted that if the unified data management network element may actively send the third message to the access management network element, step 602 may be omitted.

It should be understood that "public network" in "the first terminal can access only a public network" refers to a public network in general. In other words, the first terminal is configured to access any public network other than a non-public network, and is not limited to accessing only the first public network. "Non-public network" in "the first terminal cannot access a non-public network" may refer to a non-public network in general. In other words, the first terminal cannot access any non-public network. "Non-public network" in "the first terminal cannot access a non-public network" refers to a specific non-public network. In other words, the first terminal cannot access the first non-public network. This is not limited in this embodiment of this application.

Step 604: The access management network element sends a second message to the first terminal based on the third message. Correspondingly, the first terminal receives the second message from the access management network element. The second message is used to indicate that registration of the first terminal with the first non-public network is rejected. The second message includes first indication information, and the first indication information indicates that access of the first terminal to the first non-public network is forbidden.

Step 605: The first terminal updates a forbidden network list of the first terminal based on the first indication information. An updated forbidden network list includes the information about the first non-public network.

Certainly, the updated forbidden network list may be considered as a first forbidden network list.

In an alternative manner, step 605 in this embodiment of this application may be implemented in the following manner: The first terminal adds the information about the first non-public network to the forbidden network list of the first terminal based on the first indication information.

It may be understood that, in an aspect, the forbidden network list of the first terminal may have information about one or more networks, and the one or more networks include the first non-public network. In other words, the forbidden network list of the first terminal may include the first non-public network. Each of the one or more networks has a record item, and the record item is used to indicate whether access to the network is forbidden or allowed. In this case, that the updated forbidden network list includes the information about the first non-public network may be understood as follows: The first terminal sets a record item corresponding to the first non-public network to an access forbidden state.

That the first terminal updates the forbidden network list of the first terminal may mean that the first terminal updates the record item corresponding to the first non-public network in the forbidden network list.

For example, if the record item of the first non-public network is an indicator a, it indicates that access to the first non-public network is forbidden. If the record item of the first non-public network is an indicator b, it indicates that the access to the first non-public network is allowed. The record item corresponding to the first non-public network in the forbidden network list is the indicator b, and then the first terminal performs step 601 to step 603 to request to access the first non-public network. However, the first terminal receives the second message in a process of requesting to access the first non-public network. The second terminal determines, based on the second message, that the access to the first non-public network is rejected. Then, the first terminal may set the record item corresponding to the first non-public network to the indicator a.

Certainly, the indicator a may alternatively be represented by an inactive state, and the indicator b may alternatively be represented by an active state. This is not limited in this embodiment of this application.

Certainly, in another aspect, the forbidden network list of the first terminal may have information about one or more networks, and the one or more networks do not include the first non-public network. In this case, that the updated forbidden network list includes the information about the first non-public network may be understood as follows: The first terminal adds the information about the first non-public network to the forbidden network list, and sets a record item corresponding to the first non-public network to an indicator a.

For example, the first non-public network is a non-public network 1, and the first terminal does not have permission to access the non-public network 1. When the first terminal is located in coverage of the non-public network 1, the first terminal may send a first message to an access management network element in the non-public network 1 through an access network device in the non-public network 1, to request to register with the non-public network 1. Then, if the first terminal receives a second message from the access management network element, and the second message indicates that registration of the first terminal with the non-public network 1 is rejected, the first terminal may determine that the non-public network 1 is a non-public network that the first terminal is forbidden to access.

In this embodiment of this application, the information about the first non-public network is used to identify the first non-public network. For example, the information about the first non-public network may be the identifier of the first non-public network. Certainly, the information about the first non-public network may alternatively be another parameter that can identify the first non-public network. This is not limited in this embodiment of this application.

This embodiment of this application provides the network access method. In the method, the first terminal sends the first message to the access management network element in the first non-public network, to request to register the first terminal with the first non-public network. Then, the first terminal receives the second message from the access management network element, where the second message indicates that the registration of the first terminal with the first non-public network is rejected, and the first indication information indicates that the access of the first terminal to the first non-public network is forbidden. This helps the first terminal update the forbidden network list of the first terminal based on the first indication information, so that the updated forbidden network list includes the information about the first non-public network. Subsequently, when selecting a network for registration, the first terminal can avoid selecting the first non-public network that the first terminal is forbidden to access. This solution can resolve a problem caused when the first terminal that does not have the permission to access a non-public network attempts to access the first non-public network.

In a possible embodiment, after step 605, the method provided in this embodiment of this application may further include: The first terminal selects, based on the updated forbidden network list, a network other than the first non-public network for registration.

In a specific implementation, that the first terminal selects, based on the updated forbidden network list, a network other than the first non-public network for registration may be implemented in the following manner: The first terminal selects, based on the updated forbidden network list, a network that is not recorded in the updated forbidden network list for registration.

For example, the first non-public network is a non-public network 1. If the updated forbidden network list includes information about the non-public network 1, the first terminal may select a non-public network 2 other than the non-public network 1 for registration. If the updated forbidden network list includes information about the non-public network 1 and information about a non-public network 2, the first terminal may select a non-public network 3 other than the non-public network 1 and the non-public network 2 for registration, where the updated forbidden network list does not include information about the non-public network 3.

In a possible embodiment, after step 605, the method provided in this embodiment of this application may further include: The first terminal starts a timer based on the first indication information. When the timer expires, the first terminal deletes the information about the first non-public network from the updated forbidden network list. In this way, when the timer expires, the first non-public network may still be used as a non-public network that the first terminal can choose to access.

It should be understood that that the timer expires may mean that a timer time value corresponding to the timer is reached.

In an alternative implementation, that the first terminal deletes the information about the first non-public network from the updated forbidden network list may alternatively be replaced in the following manner: The first terminal updates the first forbidden network list to obtain a second forbidden network list. The second forbidden network list does not include the information about the first non-public network, or a record item corresponding to the first public network in the second forbidden network list indicates that the first non-public network is an accessible network. This is not limited in this embodiment of this application.

With reference to the foregoing example, when the timer expires, the first terminal updates the record item corresponding to the first non-public network from the indicator a to the indicator b.

It may be understood that, when the first terminal deletes the information about the first non-public network from the updated forbidden network list, the first terminal may subsequently continue to request to register with the first non-public network. For example, for the first terminal that does not have the permission to access a non-public network, if the first terminal has the permission to access a non-public network after configuration, when the timer time value corresponding to the timer is reached, because the first terminal deletes the information about the first non-public network from the forbidden network list, the first terminal may subsequently register with the first non-public network.

It should be noted that, in this embodiment of this application, deleting information about a non-public network from a forbidden network list may also be expressed as: setting, by the second terminal, a record item corresponding to the non-public network to the indicator a.

In this embodiment of this application, the timer time value corresponding to the timer may be predefined in a protocol, or the timer time value corresponding to the timer may be configured by the first terminal, or the timer time value corresponding to the timer may be configured by the access management network element for the first terminal.

When the access management network element configures the timer time value corresponding to the timer for the first terminal, the second message includes the timer time value. Correspondingly, the first terminal sets the timer based on the timer time value. Certainly, the access management network element may alternatively send, to the first terminal by using a message other than the second message, the timer time value corresponding to the timer. This is not limited in this embodiment of this application.

The embodiment described in FIG. 6 is applicable to the following scenarios:
Scenario 1: Both the first non-public network and the first public network are networks defined in a first release. For example, the first non-public network is an R16 non-public network, and the first public network is an R16 public network.
Scenario 2: Both the first non-public network and the first public network are networks defined in a second release. For example, the first non-public network is an R17 non-public network, and the first public network is an R17 public network. In this case, the access management network element may be the AMF network element 1 in FIG. 5b.

In the scenario 1 and the scenario 2, when interworking is not supported between the first non-public network and the first public network, step 605 may be omitted. In this case, the first indication information in the second message may be replaced with indication information x, where the indication information x is used to indicate that a cause for forbidding the access of the first terminal to the first non-public network is that the first terminal is an illegal terminal. That the first terminal is an illegal terminal indicates that the first non-public network cannot identify an identity of the first terminal.

In the scenario 2, when interworking is supported between the first non-public network and the first public network, step 605 is a mandatory step.

It should be noted that, if the first non-public network is an R17 non-public network and the first public network is an R17 public network, the first non-public network interworks with the first public network by using a roaming architecture.

FIG. 7 shows an interaction embodiment of a network access method according to an embodiment of this application. The method includes the following steps.

Step 701: An access network device in a first non-public network sends broadcast information. Correspondingly, a second terminal receives the broadcast information from the access network device in the first non-public network. The broadcast information includes first indication information, and the first indication information is used to indicate that the first non-public network and a public network are interworked.

The second terminal in this embodiment of this application has permission to access a non-public network. Certainly, the second terminal may have permission to access a public network, or the second terminal may not have the permission to access a public network. This is not limited in this embodiment of this application.

It should be noted that, in an aspect, "non-public network" in "the second terminal has permission to access a non-public network" may refer to a non-public network in general. In other words, the second terminal has permission to access any non-public network. For example, regardless of whether the non-public network is a non-public network 1 or a non-public network 2, the second terminal can access the non-public network. In another aspect, "non-public network" in "the second terminal has permission to access a non-public network" may refer to a specific non-public network. In other words, the second terminal can access only the specific non-public network (for example, the specific non-public network is the first non-public network).

It may be understood that "public network" in "the first non-public network and a public network are interworked" may be any public network in general.

It should be understood that the second terminal is located in coverage of the first non-public network, and the second terminal can receive the broadcast information sent by the access network device in the first non-public network.

For example, the first indication information may be a first indicator, and the first indicator is used to indicate that the first non-public network and the public network are interworked. For example, the first indication information may be "1".

In a specific implementation, the first indication information is used to indicate that the first non-public network and the public network are interworked by using a roaming architecture. This helps the second terminal access the first non-public network by using the roaming architecture. That the second terminal accesses the first non-public network by using the roaming architecture may mean that the second terminal accesses the first non-public network by using subscription information (for example, the following first subscription information) of the second terminal in the public network.

In a possible implementation, before step 701, the method in this embodiment of this application may further include: The access network device in the first non-public network determines that the first non-public network and the public network are interworked. For example, that the access network device in the first non-public network determines that the first non-public network and the public network are interworked may be implemented in the following manner: The access network device determines, based on operator configuration information, that the non-public network and the public network are interworked.

Step 702: The second terminal determines, based on the broadcast information, to access the first non-public network by using the first subscription information. The first subscription information is subscription information of the second terminal in a first public network.

In a possible implementation, a first identifier of the second terminal that is carried in the first subscription information is related to the first public network. For example, the first identifier of the second terminal carries information about the first public network, for example, a network identifier PLMN ID.

It may be understood that the first public network is one of one or more public networks that interwork with the first non-public network.

For example, the first public network may be the public network 200 in FIG. 5b. The first non-public network may be the non-public network 100 in FIG. 5b. An access management network element may be the AMF network element 1 in FIG. 5b.

This embodiment of this application provides the network access method. In the method, the second terminal receives the broadcast information broadcast by the access network device, and this helps the second terminal determine, based on the first indication information carried in the broadcast information, that the first non-public network supports interworking with the public network. Then, the second terminal may determine that the second terminal can access the first non-public network by using the first subscription information. When the second terminal subsequently needs to access the first non-public network, the second terminal may use the first subscription information to request to register with the first non-public network. This avoids a registration failure caused when the second terminal blindly initiates a registration request to the first non-public network without knowing that the public network and the first non-public network are interworked.

In a possible embodiment, after step 702, the method provided in this embodiment of this application may further include: The second terminal accesses the first non-public network by using the first subscription information.

In a possible implementation, that the second terminal accesses the first non-public network by using the first subscription information may be implemented in the following manner: The second terminal sends a first message to the access management network element in the first non-public network by using the first subscription information, where the first message is used to indicate that the second terminal registers with the first non-public network. The first message carries the first identifier of the second terminal.

In an example, the first message may carry a registration indication, and the registration indication is used to indicate that the second terminal registers with the first non-public network.

In a possible embodiment, the broadcast information further includes information about one or more public networks that interwork with the first non-public network, and the first public network belongs to the one or more public networks. The access network device broadcasts the information about the one or more public networks, and this helps the second terminal determine the one or more public networks that can be accessed by the second terminal.

In a possible implementation, the broadcast information may further include a manual selection access indication, and the second terminal prompts, based on the manual selection access indication, a user to access the first non-public network in a manual selection manner. This prevents the second terminal from automatically selecting the first non-public network.

For example, if the first non-public network belongs to a country A, the one or more public networks also belong to the country A.

In a possible implementation, the first public network may be any one of the one or more public networks. In other words, the second terminal may select any public network from the one or more public networks as the first public network. In another possible implementation, a network selection priority of the first public network is the highest among network selection priorities of the one or more public networks. Alternatively, the first public network is a public network supported by the second terminal.

It should be understood that the second terminal has a network selection priority of each of the one or more public networks.

In a possible implementation, the second terminal has subscription information between the second terminal and the public network.

The first non-public network in the embodiment described in FIG. 7 may be an R17 non-public network. The public network may be an R17 public network. In other words, the first non-public network and the public network in the embodiment described in FIG. 7 are interworked by using the roaming architecture.

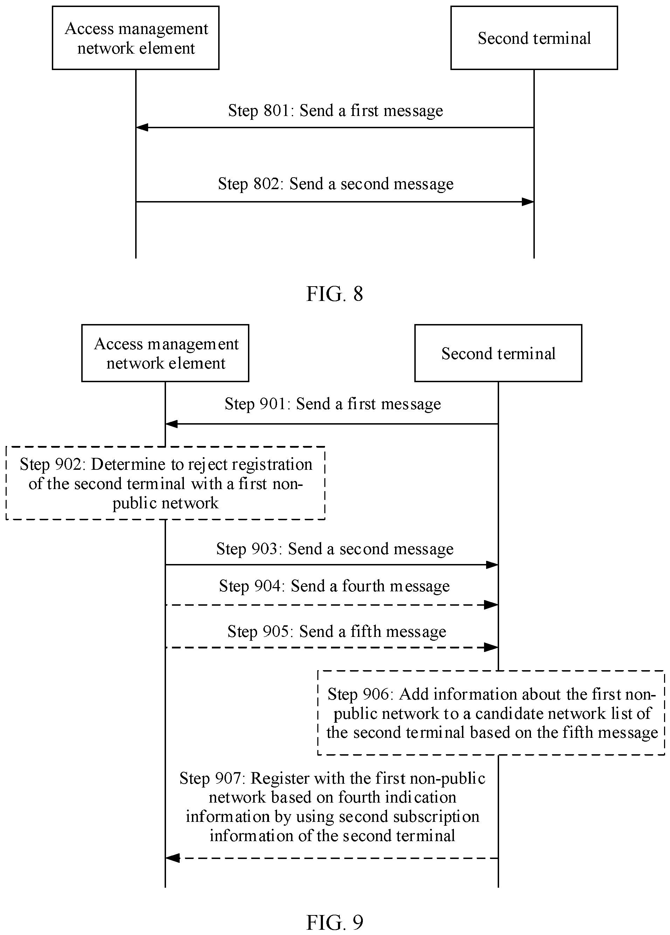

FIG. 8 shows an interaction embodiment of a network access method according to an embodiment of this application. The method includes the following steps.

Step 801: A second terminal sends a first message to an access management network element in a first non-public network by using first subscription information. Correspondingly, the access management network element in the first non-public network receives the first message from the second terminal, where the first message is used to indicate that the second terminal requests to register with the first non-public network by using the first subscription information.

In an example, the second terminal in this embodiment of this application is a second terminal that supports a first-release network. The second terminal that supports the first-release network means that the second terminal has non-public network subscription information between the second terminal and a first non-public network of a first release, and has public network subscription information between the second terminal and a first public network of the first release. In this case, in step 801, "first non-public network" in "a second terminal sends a first message to an access management network element in a first non-public network by using first subscription information" refers to a first non-public network of a second release.

When the second terminal is the second terminal that supports the first-release network, the access management network element in the first non-public network may be an access management network element in the first non-public network of the second release. In this case, the first subscription information is subscription information of the second terminal in the first non-public network. In other words, the first subscription information is the non-public network subscription information of the second terminal in the first non-public network of the first release.

In another example, the second terminal in this embodiment of this application is a second terminal that supports a second-release network. The second terminal that supports the second-release network means that the second terminal has public network subscription information between the second terminal and a first public network of a second release. In this case, in step 801, "first non-public network" in "a second terminal sends a first message to an access management network element in a first non-public network by using first subscription information" refers to a first non-public network of a first release.

When the second terminal is the second terminal that supports the second-release network, the access management network element in the first non-public network may be an access management network element in the first non-public network of the first release. In this case, the first subscription information is subscription information of the second terminal in the first public network. In other words, the first subscription information is the public network subscription information between the second terminal and the first public network of the second release.

The first release may be the R16 release, and the second release may be the R17 release.

In a possible implementation, when the first public network of the second release interworks with the first non-public network of the second release by using a roaming architecture, the first subscription information is the subscription information of the second terminal in the first non-public network of the first release. In this case, a second identifier of the second terminal that is carried in the first subscription information is related to the first non-public network. For example, the second identifier of the second terminal includes an identifier of the first non-public network.

In a possible implementation, when the first public network of the first release interworks with the first non-public network of the first release through an N3IWF, the first subscription information is the subscription information of the second terminal in the first public network of the second release. In this case, a third identifier of the second terminal that is carried in the first subscription information is related to the first public network. For example, the third identifier of the second terminal includes information about the first public network. For example, the information about the first public network is used to identify the first public network.

It should be understood that, in this embodiment of this application, that a second terminal sends a first message to an access management network element in a first non-public network by using first subscription information may be understood as: The second terminal sends the first message to the access management network element in the first non-public network, where an identifier of the second terminal that is included in the first message may be obtained from the first subscription information.

For example, if the first non-public network is the first non-public network of the second release, the first message sent by the second terminal to the access management network element in the first non-public network by using the first subscription information carries the second identifier of the second terminal. For example, if the first non-public network is the first non-public network of the first release, the first message sent by the second terminal to the access management network element in the first non-public network by using the first subscription information carries the third identifier of the second terminal.

Step 802: The access management network element sends a second message to the second terminal. Correspondingly, the second terminal receives the second message from the access management network element.

The second message is used to reject registration of the second terminal with the non-public network, the second message includes fourth indication information, and the fourth indication information is used to indicate a cause for rejecting the registration of the second terminal with the non-public network.

In conclusion, the embodiment described in FIG. 8 is applicable to a scenario in which a release of a non-public network or a public network to which the second terminal subscribes is different from a release of a non-public network with which the second terminal registers. Details are as follows: Case 1: When the second terminal uses private network subscription information of the second terminal in the first non-public network of the first release to request to register with the first non-public network of the second release, the access management network element in the first non-public network of the second release rejects registration of the second terminal with the first non-public network of the second release. Case 2: When the second terminal uses the public network subscription information of the second terminal in the first public network of the second release to request to register with the first non-public network of the first release, the access management network element in the first non-public network of the first release rejects registration of the second terminal with the first non-public network of the first release.

The first subscription information may be the subscription information of the second terminal in the first non-public network, or may be the subscription information of the second terminal in the first public network. However, in different cases, processing actions performed by the second terminal after receiving the second message are different. The actions are separately described below.

Example 1: The first subscription information is the subscription information of the second terminal in the first non-public network. In other words, the first subscription information is the subscription information of the second terminal in the first non-public network of the first release. However, a first non-public network with which the second terminal is to register is the first non-public network of the second release, and the first public network is the first public network of the second release.

This embodiment of this application provides the network access method. In the method, the second terminal sends the first message to the access management network element in the first non-public network by using the first subscription information, where the first subscription information is the subscription information of the second terminal in the first non-public network, or the first subscription information is the subscription information of the second terminal in the first public network. Then, the second terminal receives the second message from the access management network element, and this helps the second terminal subsequently determine, based on the second message, that the access management network element in the first non-public network rejects the registration of the second terminal with the non-public network, and determine, based on the fourth indication information, the cause for rejecting the registration of the second terminal with the non-public network by the access management network element. This solution can resolve a problem caused when the second terminal registers with the first non-public network by using the subscription information of the second terminal in the first non-public network, or resolve a problem caused when the second terminal registers with the first non-public network by using the subscription information of the second terminal in the first public network.

FIG. 9 shows another network access method according to an embodiment of this application. The method includes the following steps.

Step 901 is the same as step 801. Details are not described herein again.

Step 902: The access management network element determines to reject registration of the second terminal with the first non-public network.

Specifically, step 902 may be implemented in the following manner: The access management network element determines, based on configuration information or the subscription information of the second terminal in the first non-public network, to reject the registration of the second terminal with the first non-public network.

For example, if the configuration information indicates that the first non-public network does not support interworking with the first public network in an N3IWF mode, the access management network element determines to reject the registration of the second terminal with the first non-public network.

For example, if the subscription information of the second terminal in the first non-public network indicates that the second terminal can no longer use the subscription information to access the first non-public network, the access management network element determines to reject the registration of the second terminal with the first non-public network.

Step 903 is the same as step 802. Details are not described herein again.

In a possible embodiment, as shown in FIG. 9, the method provided in this embodiment of this application may further include step 904 after step 903, or the method provided in this embodiment of this application may further include step 905 and step 906 after step 904.

Step 904: The access management network element sends a fourth message to the second terminal. Correspondingly, the second terminal receives the fourth message from the access management network element. The fourth message includes a candidate network list of the second terminal. The candidate network list includes information about the first non-public network.

In this embodiment of this application, when the candidate network list includes the information about the first non-public network, it indicates that the second terminal may register with the first public network. That the candidate network list includes information about the first non-public network may also be replaced with that a record item corresponding to the first public network that is included in the candidate network list is in an active state.

It should be understood that the candidate network list of the second terminal includes one or more candidate non-public networks that the second terminal can choose to access. The first non-public network belongs to the one or more candidate non-public networks.

It may be understood that, in step 904, the second terminal can determine that although the registration of the second terminal with the first non-public network by using the subscription information of the second terminal in the first non-public network of the first release is rejected, the second terminal can register with the first non-public network.

Step 905: The access management network element sends a fifth message to the second terminal. Correspondingly, the second terminal receives the fifth message from the access management network element. The fifth message is used to indicate that registration of the second terminal with the first non-public network is accepted.

For example, the fifth message includes an accept indication, and the accept indication is used to indicate that the registration of the second terminal with the first non-public network is accepted.

Step 906: The second terminal adds the information about the first non-public network to the candidate network list of the second terminal based on the fifth message.

In an alternative implementation, step 906 in this embodiment of this application may also be described as follows: The second terminal updates a forbidden network list of the second terminal based on the fifth message. An updated forbidden network list includes the information about the first non-public network.

For details of a manner in which the second terminal updates the forbidden network list of the second terminal, refer to the foregoing process in which the first terminal updates the forbidden network list of the first terminal. Details are not described herein again.

It may be understood that, in step 905 and step 906, the second terminal can determine that although the registration of the second terminal with the first non-public network by using the subscription information of the second terminal in the first non-public network of the first release is rejected, the second terminal can register with the first non-public network.

In a possible embodiment, as shown in FIG. 9, when the second terminal determines that the second terminal can register with the first non-public network, the method provided in this embodiment of this application may further include the following step.

Step 907: The second terminal registers with the first non-public network based on the fourth indication information by using second subscription information of the second terminal, where the second subscription information is subscription information of the second terminal in the first public network.

The second subscription information includes an identifier of the first public network, the second subscription information includes a fifth identifier of the second terminal, and the fifth identifier is related to the identifier of the first public network.

It may be understood that when the first subscription information is the subscription information of the second terminal in the first non-public network, the fourth indication information may be further used to indicate the second terminal to register with the first non-public network by using a roaming architecture. In other words, the fourth indication information may be further used to indicate the second terminal to register with the first non-public network by using the second subscription information of the second terminal. This is not limited in this embodiment of this application.

This embodiment of this application provides the network access method. In the method, the second terminal sends the first message to the access management network element in the first non-public network by using the first subscription information, where the first subscription information is the subscription information of the second terminal in the first non-public network. Then, the second terminal receives the second message from the access management network element, and this helps the second terminal subsequently determine, based on the second message, that the access management network element in the first non-public network rejects the registration of the second terminal with the non-public network, and determine, based on the fourth indication information, the cause for rejecting the registration of the second terminal with the non-public network by the access management network element. Subsequently, if the second terminal needs to continue to register with the first non-public network, the second terminal may register with the first non-public network by using the second subscription information of the second terminal based on the cause. In this solution, after the registration with the first non-public network by using the subscription information of the second terminal in the first non-public network is rejected, the second terminal can register with the first non-public network by using the second subscription information.

Example 2: The first subscription information is the subscription information of the second terminal in the first public network. In other words, the first subscription information is the subscription information of the second terminal in the first public network of the second release. However, a first non-public network with which the second terminal is to register is the first non-public network of the first release. A first public network that interworks with the first non-public network of the first release is the first public network of the first release.

In this case, the fourth indication information is used to indicate that the second terminal is an illegal terminal. In other words, the fourth indication information is used to indicate that the non-public network cannot identify an identity of the second terminal.

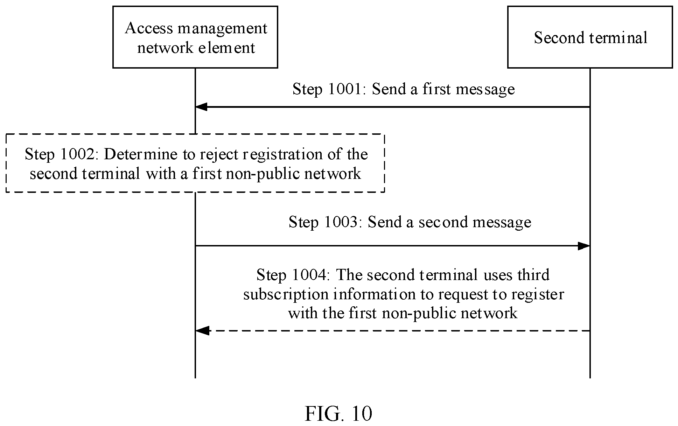

FIG. 10 shows another network access method according to an embodiment of this application. The method includes the following steps.

Step 1001 is the same as step 801. Details are not described herein again.

Step 1002: The access management network element determines to reject registration of the second terminal with the first non-public network.

Specifically, step 1002 may be implemented in the following manner: If the access management network element cannot obtain the subscription information of the second terminal or cannot identify the identity of the second terminal, that is, authentication of the second terminal fails, the access management network element determines to reject the registration of the second terminal with the first non-public network.

Step 1003 is the same as step 802. Details are not described herein again.

It should be understood that the second message is further used to indicate the second terminal to use third subscription information to request to register with the first non-public network.

In a possible embodiment, when the second terminal further has the third subscription information of the second terminal in the first non-public network, as shown in FIG. 10, after step 1003, the method provided in this embodiment of this application may further include the following step.

Step 1004: The second terminal uses the third subscription information to request to register with the first non-public network.

It should be understood that the third subscription information is subscription information between the second terminal and the first non-public network of the first release. The third subscription information includes a fourth identifier of the second terminal, and the fourth identifier is related to the first non-public network. For example, the fourth identifier includes information about the first non-public network. For example, the information about the first non-public network is an identifier of the first non-public network. For content of the identifier of the first non-public network, refer to descriptions in other places in embodiments of this application. Details are not described herein again.

In a possible implementation, step 1004 in this embodiment of this application may be implemented in the following manner: The second terminal sends a registration request message to the access management network element in the non-public network of the first release, where the registration request message is used to request to register the second terminal in the non-public network of the first release. The registration request message includes the fourth identifier of the second terminal. The fourth identifier of the second terminal is determined based on the third subscription information. In other words, the fourth identifier of the second terminal includes the information about the first non-public network.

In a possible implementation, after the second terminal successfully registers with the first non-public network of the first release, the method provided in this embodiment of this application may further include: The second terminal uses the subscription information of the second terminal in the first public network to request to register with the first public network of the first release.

It may be understood that the second message in step 1003 in the example 2 may further include indication information used to indicate the second terminal to use the third subscription information to request to register with the first non-public network.

This embodiment of this application provides the network access method. In the method, the second terminal sends the first message to the access management network element in the first non-public network by using the first subscription information, where the first subscription information is the subscription information of the second terminal in the first public network. Then, the second terminal receives the second message from the access management network element, and this helps the second terminal subsequently determine, based on the second message, that the access management network element in the first non-public network rejects the registration of the second terminal with the non-public network, and determine, based on the fourth indication information, that the cause for rejecting the registration of the second terminal with the non-public network by the access management network element is that the second terminal is an illegal terminal. Subsequently, if the second terminal needs to continue to register with the first non-public network, the second terminal may register with the first non-public network by using the third subscription information of the second terminal based on the cause. In this solution, after the registration with the first non-public network by using the subscription information of the second terminal in the first public network is rejected, the second terminal can register with the first non-public network by using the third subscription information.

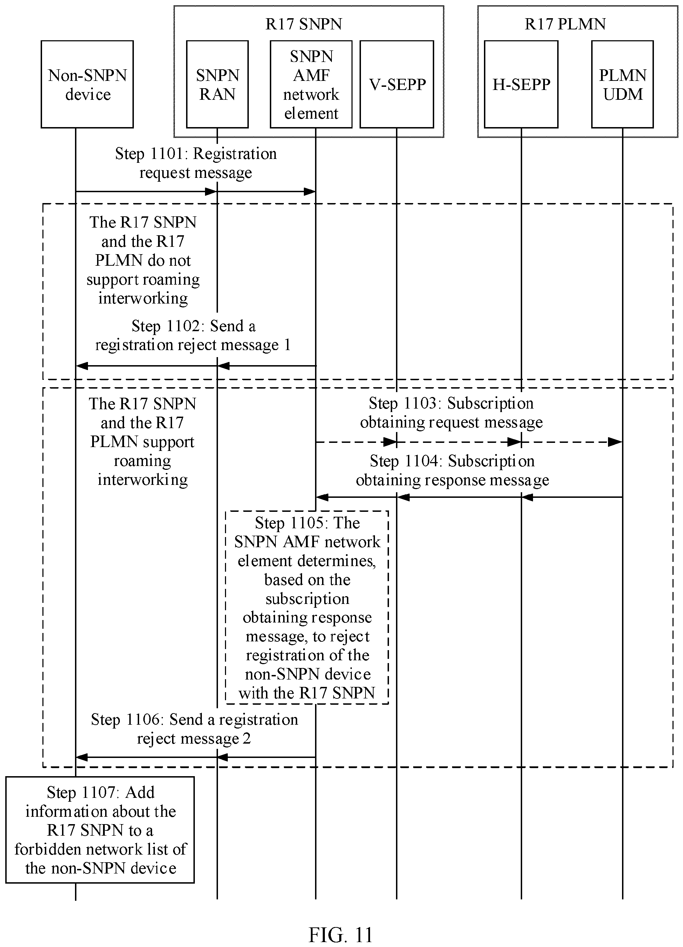

With reference to the architecture shown in FIG. 5b, as shown in FIG. 11, an example in which a first terminal is a non-SNPN device, a first non-public network is an SNPN of the R17 release (referred to as an R17 SNPN for short below, and corresponding to the non-public network 100 in FIG. 5b), an access management network element is an SNPN AMF network element (corresponding to the AMF network element 1 in FIG. 5b) in the R17 SNPN, an access network device is an SNPN RAN, a public network is a PLMN of the R17 release (referred to as an R17 PLMN for short below, and corresponding to the public network 200 in FIG. 5b), and a unified data management network element is the UDM network element in FIG. 5b is used, and a method includes the following steps.

Step 1101: The non-SNPN device sends a registration request message to the SNPN AMF network element. Correspondingly, the SNPN AMF network element receives the registration request message from the non-SNPN device. The registration request message is used to request to register the non-SNPN device with the R17 SNPN.

For example, the registration request message carries an identifier of the non-SNPN device. For example, the identifier of the non-SNPN device may be an SUPI or an SUCI.

In a specific implementation, step 1101 may be implemented in the following manner: The non-SNPN device sends the registration request message to the SNPN AMF network element through the SNPN RAN in the R17 SNPN. In addition, the SNPN AMF network element may further receive an identifier of the R17 SNPN from the SNPN RAN, and the identifier of the R17 SNPN is used to identify the R17 SNPN. The SUPI or the SUCI of the non-SNPN device includes an HPLMN ID of the non-SNPN device. The HPLMN ID is used to determine a home public network corresponding to the non-SNPN device.

Step 1102: If roaming interworking is not supported between the R17 SNPN and the R17 PLMN, the SNPN AMF network element sends a registration reject message 1 to the non-SNPN device. Correspondingly, the non-SNPN device receives the registration reject message 1 from the SNPN AMF network element.

The registration reject message 1 is used to indicate that registration of the non-SNPN device with the R17 SNPN is rejected, and the registration reject message 1 may further carry a cause for rejecting the registration of the non-SNPN device with the R17 SNPN, where the cause is that the non-SNPN device is an illegal terminal (Illegal UE).

Step 1103: If roaming interworking is supported between the R17 SNPN and the R17 PLMN, the SNPN AMF network element sends a subscription obtaining request message to the UDM network element in the R17 PLMN. Correspondingly, the UDM network element receives the subscription obtaining request message from the SNPN AMF network element. The subscription obtaining request message is used to request subscription data of the non-SNPN device.

For example, the subscription obtaining request message carries the identifier of the R17 SNPN and the identifier of the non-SNPN device. The identifier of the R17 SNPN is carried in the subscription obtaining request message, and this helps the UDM network element determine a non-public network to be accessed by the non-SNPN device.

As shown in FIG. 11, step 1103 may be implemented in the following manner: The SNPN AMF network element sends the subscription obtaining request message to a V-SEPP in the R17 SNPN. Then, the V-SEPP sends the obtained subscription obtaining request message to an H-SEPP in the R17 PLMN, so that the H-SEPP forwards the subscription obtaining request message to the UDM network element.

Step 1104: The UDM network element sends a subscription obtaining response message to the SNPN AMF network element. Correspondingly, the SNPN AMF network element receives the subscription obtaining response message from the UDM network element. The subscription obtaining response message is used by the SNPN AMF network element to determine to reject registration of the non-SNPN device with the R17 SNPN.

As shown in FIG. 11, step 1104 may be implemented in the following manner: The UDM network element sends the subscription obtaining response message to the H-SEPP in the R17 PLMN. Then, the H-SEPP sends the obtained subscription obtaining response message to the V-SEPP in the R17 SNPN, so that the V-SEPP sends the subscription obtaining response message to the SNPN AMF network element in the R17 SNPN.

For example, in an aspect, the subscription obtaining response message carries the subscription data of the non-SNPN device, the subscription data includes second indication information, and the second indication information is used to indicate that the non-SNPN device can access only a public network. Alternatively, the second indication information is used to indicate that the non-SNPN device cannot access a non-public network. For example, the second indication information includes a supported network list of the non-SNPN device. The supported network list of the non-SNPN device does not include information about the R17 SNPN. Alternatively, a record item corresponding to the R17 SNPN in the supported network list of the non-SNPN device is used to indicate that access to the R17 SNPN is forbidden.

In another aspect, the subscription obtaining response message includes third indication information, and the third indication information is used to indicate that the subscription data of the non-SNPN device is not successfully obtained.

In still another aspect, the subscription obtaining response message includes a cause value, and the cause value is used to indicate that the non-SNPN device is not allowed to access the R17 SNPN.

In yet another aspect, the subscription obtaining response message does not include the subscription data of the non-SNPN device.

Step 1105: The SNPN AMF network element determines, based on the subscription obtaining response message, to reject the registration of the non-SNPN device with the R17 SNPN.

Step 1106: The SNPN AMF network element sends a registration reject message 2 to the non-SNPN device. Correspondingly, the non-SNPN device receives the registration reject message 2 from the SNPN AMF network element. The registration reject message 2 is used to indicate that the registration of the non-SNPN device with the R17 SNPN is rejected. The registration reject message 2 may further carry a cause for rejecting the registration of the non-SNPN device with the R17 SNPN. For example, the cause for rejecting the registration of the non-SNPN device with the R17 SNPN is that the non-SNPN device is not allowed to access the R17 SNPN.

Step 1107: The non-SNPN device adds the information about the R17 SNPN to a forbidden network list of the non-SNPN device.

It should be understood that step 1107 may alternatively be implemented in the following manner: The non-SNPN device updates the forbidden network list of the non-SNPN device. An updated forbidden network list of the non-SNPN device includes the information about the R17 SNPN. The information about the R17 SNPN is used to identify the R17 SNPN. For example, the information about the R17 SNPN may be the identifier of the R17 SNPN.

It should be understood that the forbidden network list includes one or more networks that the non-SNPN device is forbidden to access, and the one or more networks include the R17 SNPN.

In a possible embodiment, after step 1107, the method provided in this embodiment of this application may further include the following step.

Step 1108: The non-SNPN device performs network selection based on the forbidden network list, to select a network other than that in the forbidden network list for registration.

It should be noted that, in the embodiment shown in FIG. 11, step 1101 and step 1102 may form a separate embodiment, to resolve a problem caused when the non-SNPN device accesses the R17 SNPN when roaming architecture interworking is not supported between the R17 SNPN and the R17 PLMN. Step 1101 and step 1103 to step 1108 may form a separate embodiment, to resolve a problem caused when the non-SNPN device accesses the R17 SNPN when roaming architecture interworking is supported between the R17 SNPN and the R17 PLMN.

It should be noted that the registration request message in the embodiment shown in FIG. 11 may correspond to the first message in the embodiment shown in FIG. 6. The subscription obtaining response message may correspond to the third message in the embodiment shown in FIG. 6. The registration reject message 2 may correspond to the second message in the embodiment shown in FIG. 6. The subscription obtaining request message may correspond to the query message in the embodiment shown in FIG. 6. The cause for rejecting the registration of the non-SNPN device with the R17 SNPN may correspond to the first indication information in the embodiment shown in FIG. 6.

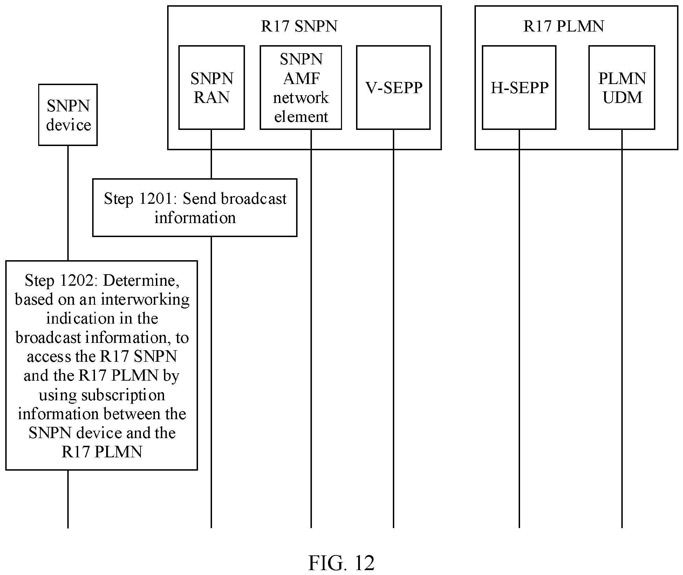

With reference to FIG. 5b, FIG. 12 shows a specific embodiment of another network access method according to this application. In this embodiment, an example in which a first non-public network is an R17 SNPN, an access network device is an SNPN RAN, and a second terminal is an SNPN device is used, and the method includes the following steps.

Step 1201: The SNPN RAN in the R17 SNPN sends broadcast information. Correspondingly, the SNPN device receives the broadcast information from the SNPN RAN. The broadcast information includes an interworking indication, and the interworking indication is used to indicate that interworking is supported between the R17 SNPN and an R17 PLMN.

It may be understood that the SNPN device is located in coverage of the R17 SNPN, and the SNPN device can receive the broadcast information from the SNPN RAN.

Step 1202: The SNPN device determines, based on the interworking indication in the broadcast information, to access the R17 SNPN and the R17 PLMN by using subscription information between the SNPN device and the R17 PLMN.

In a possible implementation, if the broadcast information further includes identifiers of one or more R17 PLMNs that interwork with the R17 SNPN, step 1202 may be implemented in the following manner: The SNPN device determines, based on the interworking indication in the broadcast information, to access the R17 SNPN and a target R17 PLMN by using target subscription information between the SNPN device and the R17 PLMN. The target R17 PLMN belongs to the one or more R17 PLMNs.

In a possible implementation, after step 1202, the embodiment shown in FIG. 12 may further include: The SNPN device sends a registration request message to an SNPN AMF network element in the R17 SNPN through the SNPN RAN in the R17 SNPN, to request to register with the R17 SNPN. The registration request message carries an identifier of the SNPN device that is described in the target subscription information, and the identifier of the SNPN device that is described in the target subscription information includes an identifier of the R17 PLMN. When the SNPN AMF network element allows the SNPN device to register with the R17 SNPN, the SNPN AMF network element sends a registration accept message to the SNPN device.

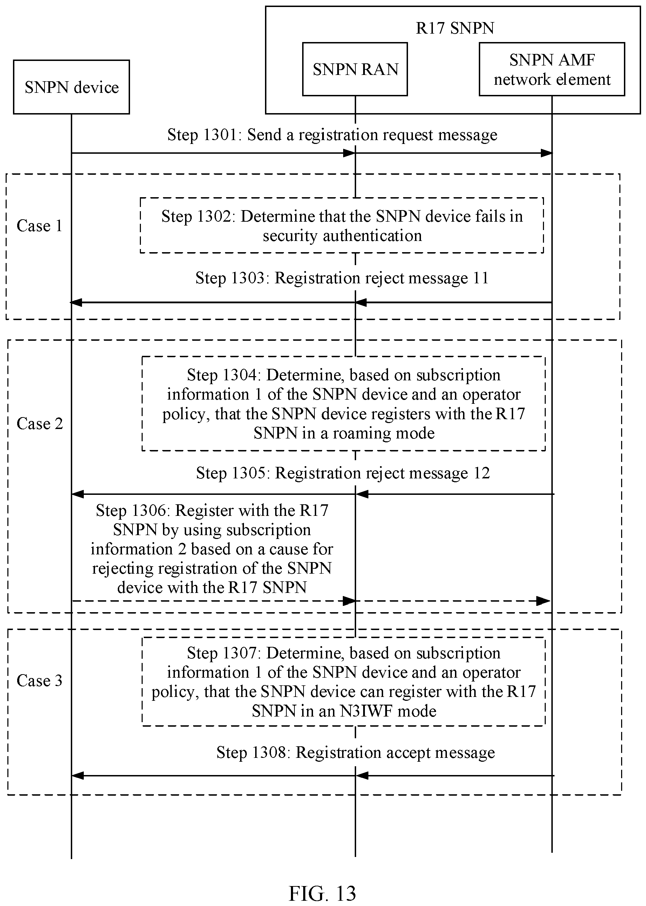

With reference to FIG. 5b, FIG. 13 describes a specific embodiment of a network access method according to an embodiment of this application by using an example in which a second terminal is an SNPN device, a first non-public network is an SNPN of the R17 release (referred to as an R17 SNPN for short below), an access management network element is an SNPN AMF network element in the R17 SNPN, an access network device is an SNPN RAN, a first public network is a PLMN of the R17 release (referred to as an R17 PLMN for short below), and a unified data management network element is a UDM network element. The method includes the following steps.

Step 1301: The SNPN device sends a registration request message to the SNPN AMF network element by using subscription information 1. Correspondingly, the SNPN AMF network element receives the registration request message from the SNPN device. The registration request message includes an identifier 1 of the SNPN device.

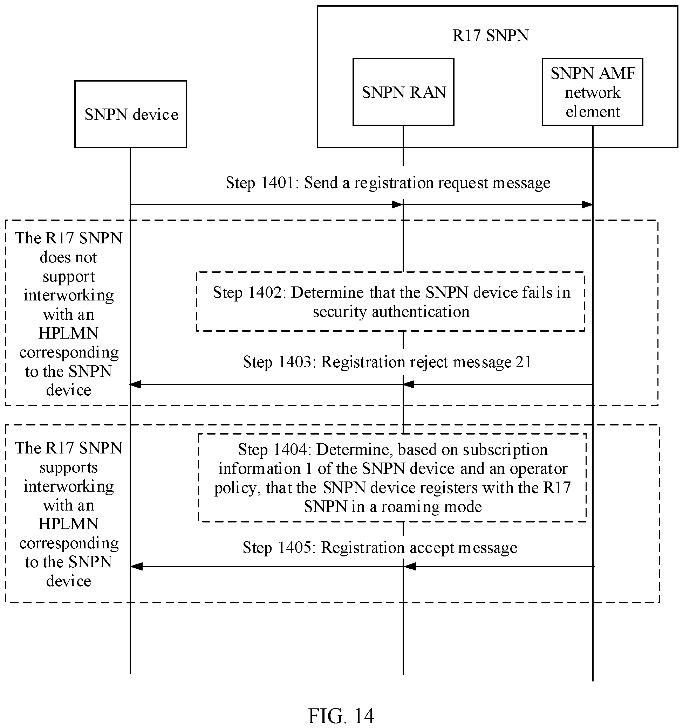

It should be understood that the SNPN device shown in FIG. 13 and FIG. 14 may be an R16 SNPN device. The R16 SNPN device means that the SNPN device has private network subscription information between the SNPN device and an SNPN of the R16 release, and also has public network subscription information between the SNPN device and a PLMN of the R16 release. The subscription information 1 may be private network subscription information, in the SNPN device, between the SNPN device and an SNPN of the R16 release. The private network subscription information between the SNPN device and the SNPN of the R16 release includes the identifier 1 of the SNPN device. The identifier 1 of the SNPN device includes an identifier of the SNPN of the R16 release.

In a case in which the SNPN AMF network element is obtained by upgrading an AMF network element in the SNPN of the R16 release and a case in which the SNPN AMF network element is directly deployed, causes for rejecting registration of the SNPN device with the R17 SNPN by the SNPN AMF network element are different. Therefore, the following provides descriptions in a case 1 to a case 3.

Case 1: The SNPN AMF network element is directly deployed.

Step 1302: The SNPN AMF network element determines that the SNPN device fails in security authentication.

Specifically, if the SNPN AMF network element is directly deployed in the R17 SNPN instead of being obtained by upgrading the AMF network element in the R16 SNPN, the SNPN AMF network element cannot parse the identifier 1 of the SNPN device. Therefore, the SNPN AMF network element determines that the SNPN device fails in the security authentication.

Step 1303: The SNPN AMF network element sends a registration reject message 11 to the SNPN device. Correspondingly, the SNPN device receives the registration reject message 11 from the SNPN AMF network element. The registration reject message 11 is used to indicate that the registration of the SNPN device with the R17 SNPN is rejected. The registration reject message 11 may further carry a cause for rejecting the registration of the SNPN device with the R17 SNPN, where the cause is that the SNPN device is an illegal terminal, in other words, the SNPN cannot identify an identity of the SNPN device.

Case 2: The SNPN AMF network element is obtained by upgrading the AMF network element in the R16 SNPN, and an operator policy does not support an N3IWF mode. In other words, the R17 SNPN and the R17 PLMN do not support interworking in the N3IWF mode, but the R17 SNPN and the R17 PLMN support interworking in a roaming mode.

Step 1304: The SNPN AMF network element determines, based on the subscription information 1 of the SNPN device and the operator policy, that the SNPN device registers with the R17 SNPN in the roaming mode.

Step 1305: The SNPN AMF network element sends a registration reject message 12 to the SNPN device. Correspondingly, the SNPN device receives the registration reject message 12 from the SNPN AMF network element. The registration reject message 12 is used to indicate that the registration of the SNPN device with the R17 SNPN is rejected. The registration reject message 12 may further carry a cause for rejecting the registration of the SNPN device with the R17 SNPN, where the cause is that the private network subscription information between the SNPN device and the SNPN of the R16 release is unavailable.

In a possible implementation, the registration reject message 12 may further carry indication information y used to indicate the SNPN device to register with the R17 SNPN by using a roaming architecture, and the indication information y is used to help the SNPN device determine to register with the R17 SNPN by using the public network subscription information.

Step 1306: The SNPN device registers with the R17 SNPN by using the public network subscription information based on the cause for rejecting the registration of the SNPN device with the R17 SNPN.

It may be understood that, after step 1306, the method may further include: The SNPN AMF network element sends a candidate network list to the SNPN device, where the candidate network list includes information about the R17 SNPN. Alternatively, after step 1306, the method may further include: The SNPN AMF network element sends a fourth message to the SNPN device, where the fourth message is used to indicate the SNPN device to add the R17 SNPN to the candidate network list. The SNPN device adds the information about the R17 SNPN to the candidate network list based on the fourth message.

Case 3: The SNPN AMF network element is obtained by upgrading the AMF network element in the R16 SNPN, and an operator policy still supports an N3IWF mode. In other words, the R17 SNPN and the R17 PLMN support interworking in the N3IWF mode.

Step 1307: The SNPN AMF network element determines, based on the subscription information 1 of the SNPN device and the operator policy, that the SNPN device can register with the R17 SNPN in the N3IWF mode.

Step 1308: The SNPN AMF network element sends a registration accept message to the SNPN device. Correspondingly, the SNPN device receives the registration accept message from the SNPN AMF network element. The registration accept message indicates that the SNPN device is allowed to register with the R17 SNPN.

With reference to FIG. 5b, FIG. 14 describes a specific embodiment of a network access method according to an embodiment of this application by using an example in which a second terminal is an SNPN device, a first non-public network is an SNPN of the R17 release (referred to as an R17 SNPN for short below), an access management network element is an SNPN AMF network element in the R17 SNPN, an access network device is an SNPN RAN, a first public network is a PLMN of the R17 release (referred to as an R17 PLMN for short below), and a unified data management network element is a UDM network element. The method includes the following steps.

Step 1401: The SNPN device sends a registration request message to the SNPN AMF network element by using subscription information 2. Correspondingly, the SNPN AMF network element receives the registration request message from the SNPN device. The registration request message includes an identifier 2 of the SNPN device.

In addition, the SNPN AMF network element may further obtain an identifier of the R17 SNPN from the SNPN RAN. The identifier 2 of the SNPN device includes an identifier of an HPLMN corresponding to the SNPN device.

The subscription information 2 is public network subscription information between the SNPN device and a PLMN of the R16 release.

Step 1402: If the R17 SNPN does not support interworking with the HPLMN corresponding to the SNPN device, the SNPN AMF network element determines that the SNPN device fails in security authentication.

Step 1403: The SNPN AMF network element sends a registration reject message 21 to the SNPN device. Correspondingly, the SNPN device receives the registration reject message 21 from the SNPN AMF network element. The registration reject message 21 is used to indicate that registration of the SNPN device with the R17 SNPN is rejected. The registration reject message 21 may further carry a cause for rejecting the registration of the SNPN device with the R17 SNPN, where the cause is that the SNPN device is an illegal terminal.

Step 1404: If the R17 SNPN supports interworking with the HPLMN corresponding to the SNPN device, the SNPN AMF network element sends a registration accept message to the SNPN device. Correspondingly, the SNPN device receives the registration accept message from the SNPN AMF network element. The registration accept message indicates that the SNPN device is allowed to register with the R17 SNPN.

In a possible implementation, if the R17 SNPN supports interworking with the HPLMN corresponding to the SNPN device, the SNPN AMF network element may further send configuration information to the SNPN device, where the configuration information is used by the SNPN device to determine a candidate network list of the SNPN device. The candidate network list includes information about the R17 SNPN.

The subscription information 2 in the embodiment described in FIG. 14 corresponds to the first subscription information in the foregoing embodiment, where the first subscription information is subscription information of the second terminal in the first non-public network. The registration request message corresponds to the foregoing first message. The registration reject message 21 corresponds to the second message in the embodiment described in FIG. 9.

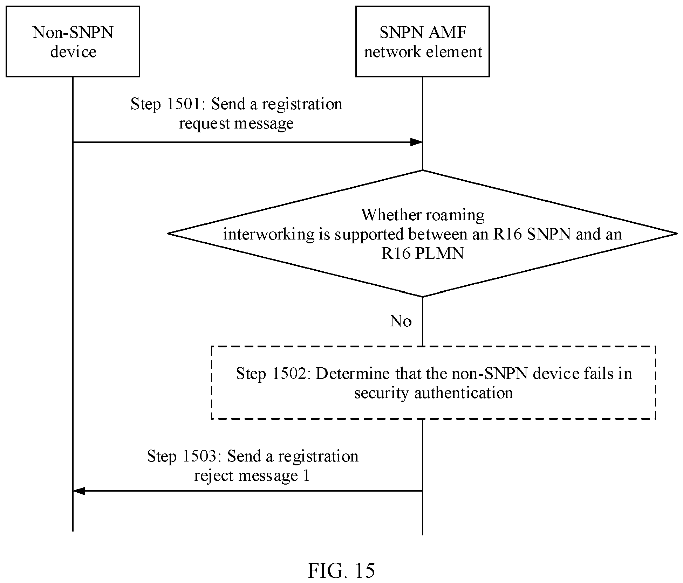

With reference to FIG. 5a, as shown in FIG. 15, an example in which a first terminal is a non-SNPN device, a first non-public network is an SNPN of the R16 release (referred to as an R16 SNPN for short below, and corresponding to the non-public network 100 in FIG. 5a), an access management network element is an SNPN AMF network element (corresponding to the AMF network element 1 in FIG. 5a) in the R16 SNPN, an access network device is an SNPN RAN, a first public network is a PLMN of the R16 release (referred to as an R16 PLMN for short below, and corresponding to the public network 200 in FIG. 5a), and a unified data management network element is a UDM network element is used, and a method includes the following steps.

Step 1501: The non-SNPN device sends a registration request message to the SNPN AMF network element. Correspondingly, the SNPN AMF network element receives the registration request message from the non-SNPN device. The registration request message is used to request to register the non-SNPN device with the R16 SNPN.

For example, the registration request message carries an identifier of the non-SNPN device. For example, the identifier of the non-SNPN device may be an SUPI or an SUCI.

In a specific implementation, step 1501 may be implemented in the following manner: The non-SNPN device sends the registration request message to the SNPN AMF network element through the SNPN RAN in the R16 SNPN. In addition, the SNPN AMF network element may further receive an identifier of the R16 SNPN from the SNPN RAN, and the identifier of the R16 SNPN is used to identify the R16 SNPN. The SUPI or the SUCI of the non-SNPN device includes an HPLMN ID of the non-SNPN device. The HPLMN ID is used to determine a home public network corresponding to the non-SNPN device.

Step 1502: If roaming interworking is not supported between the R16 SNPN and the R16 PLMN, the SNPN AMF network element determines that the non-SNPN device fails in security authentication.

Step 1503: The SNPN AMF network element sends a registration reject message 1 to the non-SNPN device. Correspondingly, the non-SNPN device receives the registration reject message 1 from the SNPN AMF network element. The registration reject message 1 indicates that registration of the non-SNPN device with the R16 SNPN is rejected.

The registration reject message 1 may further carry a cause for rejecting the registration of the non-SNPN device with the R16 SNPN, where the cause is that the non-SNPN device is an illegal terminal.

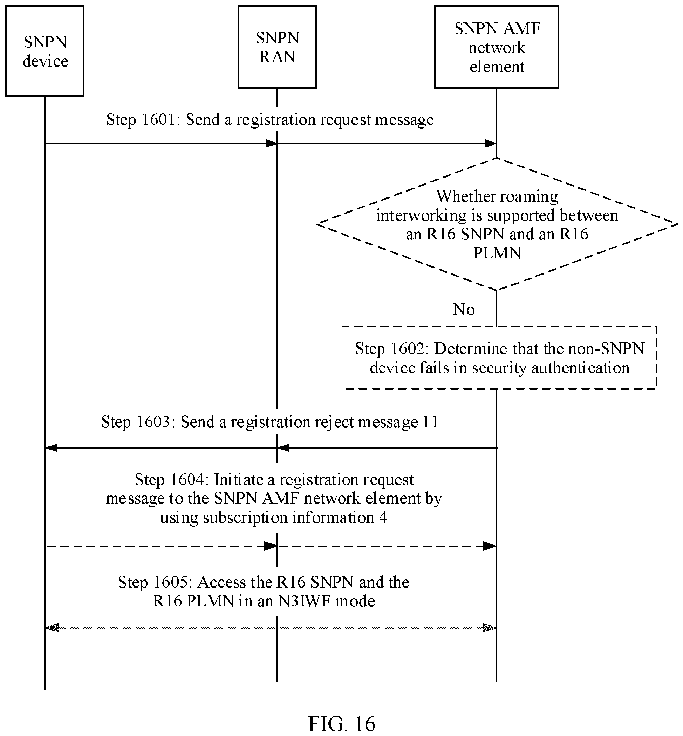

With reference to FIG. 5a, as shown in FIG. 16, an example in which a second terminal is an SNPN device, a non-public network of the SNPN device is an SNPN of the R16 release (referred to as an R16 SNPN for short below), an access management network element is an SNPN AMF network element in the R16 SNPN, an access network device is an SNPN RAN, a public network of the SNPN device is a PLMN of the R16 release (referred to as an R16 PLMN for short below), and a unified data management network element is a UDM network element is used, and a method includes the following steps.

Step 1601: The SNPN device sends a registration request message to the SNPN AMF network element by using subscription information 3. Correspondingly, the SNPN AMF network element receives the registration request message from the SNPN device. The registration request message includes an identifier 3 of the SNPN device.

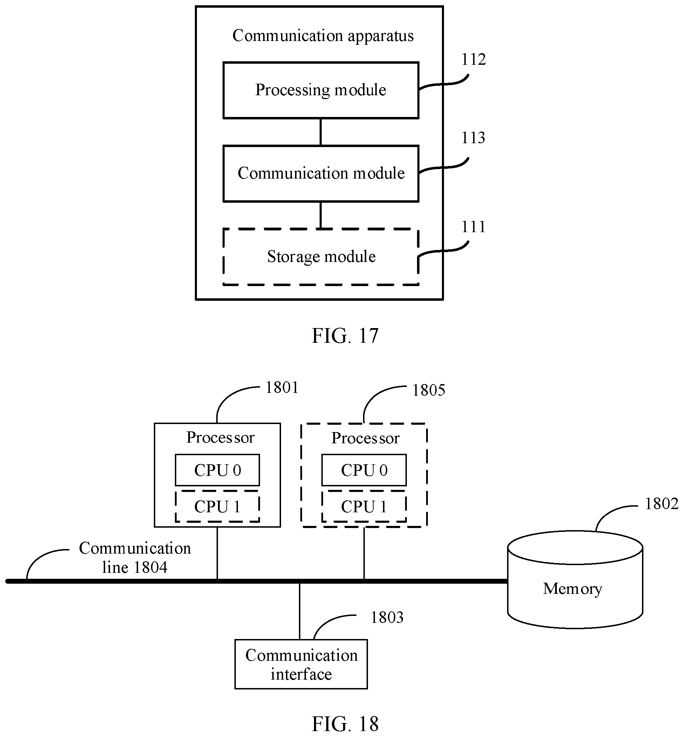

It should be understood that the SNPN device shown in FIG. 16 and FIG. 17 may be an R17 SNPN device. The R17 SNPN device means that the SNPN device has subscription information between the SNPN device and a PLMN of the R17 release, that is, the subscription information 3.

The identifier 3 of the SNPN device in step 1601 includes an HPLMN ID corresponding to the SNPN device.

Step 1602: If roaming interworking is not supported between the R16 SNPN and the R16 PLMN, the SNPN AMF network element cannot parse the identifier 3 of the SNPN device, and determines that the SNPN device fails in security authentication.

Step 1603: The SNPN AMF network element sends a registration reject message 11 to the SNPN device. Correspondingly, the SNPN device receives the registration reject message 11 from the SNPN AMF network element. The registration reject message 11 is used to indicate that registration of the SNPN device with the R17 SNPN is rejected. The registration reject message 11 may further carry a cause for rejecting the registration of the SNPN device with the R17 SNPN, where the cause is that the SNPN device is an illegal terminal.

Step 1604: If the SNPN device further has subscription information 4, when detecting the available SNPN, the SNPN device may further initiate a registration request message to the SNPN AMF network element by using the subscription information 4.

In an example, the subscription information 4 is subscription information between the SNPN device and the R16 SNPN. In another example, the subscription information 4 is subscription information between the SNPN device and an R17 SNPN.

The subscription information 4 includes an identifier 4 of the SNPN device, and the identifier 4 of the SNPN device is related to an identifier of the SNPN. For example, the identifier 4 of the SNPN device includes the identifier of the SNPN. Specifically, the registration request message in step 1604 carries the identifier 4 of the SNPN device.

Step 1605: The SNPN device accesses the R16 SNPN and the R16 PLMN in an N3IWF mode.

For a specific implementation of step 1605, refer to descriptions in a current technology. Details are not described herein.

In this embodiment of this application, if the SNPN device has both private network subscription information between the SNPN device and the R16 SNPN and public network subscription information between the SNPN device and the R16 PLMN, the SNPN device may access the R16 SNPN and the R16 PLMN in the N3IWF mode.

That the SNPN device may access the R16 SNPN and the R16 PLMN in the N3IWF mode means that the SNPN device may use the private network subscription information to request to register with the R16 SNPN. When the SNPN device successfully registers with the R16 SNPN, the SNPN device may use the public network subscription information between the SNPN device and the R16 PLMN to request to register with the R16 PLMN.

For example, the subscription information 4 in the embodiment described in FIG. 16 may be the third subscription information of the second terminal in the first non-public network. The subscription information 3 may be the first subscription information in the foregoing embodiment, where the first subscription information is subscription information of the second terminal in the first public network. The registration request message may be the foregoing first message. The registration reject message 11 corresponds to the second message in the embodiment described in FIG. 10.

The foregoing mainly describes the solutions in embodiments of this application from a perspective of interaction between network elements. It may be understood that to implement the foregoing functions, each network element, for example, the first terminal, the second terminal, the access management network element, the unified data management network element, or the access network device, includes a corresponding structure and/or software module for performing each function. A person skilled in the art should easily be aware that, in combination with the units and algorithm steps in the examples described in the embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first terminal, the second terminal, the access management network element, the unified data management network element, and the access network device may be divided into functional units based on the foregoing method examples. For example, each functional unit may be obtained through division based on a corresponding function, or two or more functions may be integrated into one processing unit. The integrated unit may be implemented in a form of hardware, or may be implemented in a form of a software functional unit. It should be noted that in embodiments of this application, division into the units is an example and is merely logical function division, and may be other division during actual implementation.

The foregoing describes the methods in embodiments of this application with reference to FIG. 6 to FIG. 16. The following describes communication apparatuses that are provided in embodiments of this application and that perform the foregoing methods. A person skilled in the art may understand that the method and the apparatus may be mutually combined and referenced. The communication apparatus provided in embodiments of this application may perform the steps performed by the first terminal, the second terminal, the access management network element, the unified data management network element, and the access network device in the foregoing method.

When an integrated unit is used, FIG. 17 shows a communication apparatus in the foregoing embodiments. The communication apparatus may include a communication module 113 and a processing module 112.

In an optional implementation, the communication apparatus may further include a storage module 111, configured to store program code and data of the communication apparatus.

In an example, the communication apparatus is a first terminal, or a chip used in the first terminal. In this case, the communication module 113 is configured to support the communication apparatus in communicating with an external network element (for example, an access management network element). For example, the communication module 113 is configured to perform signal receiving and sending operations of the first terminal in the foregoing method embodiments. The processing module 112 is configured to perform a signal processing operation of the first terminal in the foregoing method embodiments.

For example, the communication module 113 is configured to perform a sending action performed by the first terminal in step 601 in FIG. 6 in the foregoing embodiments. The communication module 113 is configured to perform a receiving action performed by the first terminal in step 604 in FIG. 6 in the foregoing embodiments. The processing module 112 is configured to support the communication apparatus in performing an action performed by the first terminal in step 605 in FIG. 6.

In another example, the communication apparatus is an access management network element, or a chip used in the access management network element. In this case, the communication module 113 is configured to support the communication apparatus in communicating with an external network element (for example, a first terminal or a unified data management network element). For example, the communication module 113 is configured to perform signal receiving and sending operations of the access management network element in the foregoing method embodiments. The processing module 112 is configured to perform a signal processing operation of the access management network element in the foregoing method embodiments.

For example, the communication module 113 is configured to perform receiving actions performed by the access management network element in step 601 and step 603 in FIG. 6 in the foregoing embodiments. The communication module 113 is configured to perform sending actions performed by the access management network element in step 602 and step 604 in FIG. 6 in the foregoing embodiments.

In still another example, the communication apparatus is a unified data management network element, or a chip used in the unified data management network element. In this case, the communication module 113 is configured to support the communication apparatus in communicating with an external network element (for example, an access management network element). For example, the communication module 113 is configured to perform signal receiving and sending operations of the unified data management network element in the foregoing method embodiments. The processing module 112 is configured to perform a signal processing operation of the unified data management network element in the foregoing method embodiments.

For example, the communication module 113 is configured to perform a receiving action performed by the unified data management network element in step 602 in FIG. 6 in the foregoing embodiments. The communication module 113 is configured to perform a sending action performed by the unified data management network element in step 603 in FIG. 6 in the foregoing embodiments.

In an example, the communication apparatus is a second terminal, or a chip used in the second terminal. In this case, the communication module 113 is configured to support the communication apparatus in communicating with an external network element (for example, an access network device). For example, the communication module 113 is configured to perform signal receiving and sending operations of the second terminal in the foregoing method embodiments. The processing module 112 is configured to perform a signal processing operation of the second terminal in the foregoing method embodiments.

For example, the communication module 113 is configured to perform a receiving action performed by the second terminal in step 701 in FIG. 7 in the foregoing embodiments. The processing module 112 is configured to support the communication apparatus in performing an action performed by the second terminal in step 702 in FIG. 7.

In an example, the communication apparatus is a second terminal, or a chip used in the second terminal. In this case, the communication module 113 is configured to support the communication apparatus in communicating with an external network element (for example, an access management network element). For example, the communication module 113 is configured to perform signal receiving and sending operations of the second terminal in the foregoing method embodiments. The processing module 112 is configured to perform a signal processing operation of the second terminal in the foregoing method embodiments.

For example, the communication module 113 is configured to perform a sending action performed by the second terminal in step 801 in FIG. 8 in the foregoing embodiments. The communication module 113 is configured to perform a receiving action performed by the second terminal in step 802 in FIG. 8 in the foregoing embodiments.

In a possible embodiment, the communication module 113 is configured to perform receiving actions performed by the second terminal in step 904 and step 905 in FIG. 9 in the foregoing embodiments. The processing module 112 is configured to support the communication apparatus in performing actions performed by the second terminal in step 906 and step 907 in FIG. 9.

In another possible embodiment, the processing module 112 is configured to support the communication apparatus in performing an action performed by the second terminal in step 1004 in FIG. 10.

In an example, the communication apparatus is an access management network element, or a chip used in the access management network element. In this case, the communication module 113 is configured to support the communication apparatus in communicating with an external network element (for example, a second terminal). For example, the communication module 113 is configured to perform signal receiving and sending operations of the access management network element in the foregoing method embodiments. The processing module 112 is configured to perform a signal processing operation of the access management network element in the foregoing method embodiments.

For example, the communication module 113 is configured to perform a receiving action performed by the access management network element in step 801 in FIG. 8 in the foregoing embodiments. The communication module 113 is configured to perform a sending action performed by the access management network element in step 802 in FIG. 8 in the foregoing embodiments.

In a possible embodiment, the processing module 112 is configured to support the communication apparatus in performing an action performed by the access management network element in step 902 in FIG. 9. The communication module 113 is configured to perform a sending action performed by the access management network element in step 904 or step 905 in FIG. 9 in the foregoing embodiments.

In another possible embodiment, the processing module 112 is configured to support the communication apparatus in performing an action performed by the access management network element in step 1002 in FIG. 10.

It should be noted that the communication module 113 shown in FIG. 17 may alternatively be replaced with a communication unit, and the processing module 112 may alternatively be replaced with a processing unit. Alternatively, the storage module 111 may be replaced with a storage unit. The processing unit is configured to control and manage actions of the communication apparatus. For example, the processing unit is configured to perform an information/data processing step performed by the communication apparatus. The communication unit is configured to support the communication apparatus in performing an information/data sending or receiving step.

In a possible implementation, the communication unit may include a receiving unit and a sending unit. The receiving unit is configured to receive a signal, and the sending unit is configured to send a signal.

The processing module 112 may be a processor or a controller, for example, may be a central processing unit, a general-purpose processor, a digital signal processor, an application-specific integrated circuit, a field-programmable gate array or another programmable logic device, a transistor logic device, a hardware component, or any combination thereof. The processing module 112 may implement or perform various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The communication module may be a transceiver, a transceiver circuit, a communication interface, or the like. The storage module may be a memory.

When the processing module 112 is a processor 1801 or a processor 1805, the communication module 113 is a communication interface 1803, and the storage module 111 is a memory 1802, the communication apparatus in this application may be a communication device shown in FIG. 18.

FIG. 18 is a schematic diagram of a hardware structure of the communication device according to an embodiment of this application. For structures of the first terminal, the second terminal, the access management network element, the unified data management network element, and the access network device in embodiments of this application, refer to the schematic diagram of the structure of the communication device shown in FIG. 18. The communication device includes the processor 1801, a communication line 1804, and at least one communication interface (where the communication interface 1803 is used as an example in FIG. 18 for description).

The processor 1801 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 1804 may include a path for transferring information between the foregoing components.

The communication interface 1803 is configured to exchange information with another apparatus. For example, the communication interface 1803 is any apparatus such as a transceiver, and is configured to communicate with another device or a communication network, for example, the Ethernet, a radio access network (radio access network, RAN), or a wireless local area network (wireless local area network, WLAN).

Optionally, the communication device may further include the memory 1802.

The memory 1802 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, and the like), a magnetic disk storage medium or another magnetic storage device, or any other medium that can be used to carry or store expected program code in an instruction form or a data structure form and that can be accessed by a computer. However, the memory 1802 is not limited thereto. The memory may exist independently, and is connected to the processor through the communication line 1804. The memory may alternatively be integrated with the processor.

The memory 1802 is configured to store computer-executable instructions for performing the solutions of this application, and the processor 1801 controls execution. The processor 1801 is configured to execute the computer-executable instructions stored in the memory 1802, to implement the network access method provided in the above embodiments of this application.

Optionally, the computer-executable instructions in embodiments of this application may also be referred to as application program code. This is not specifically limited in embodiments of this application.

During specific implementation, in an embodiment, the processor 1801 may include one or more CPUs, for example, a CPU 0 and a CPU 1 in FIG. 18.

During specific implementation, in an embodiment, the communication device may include a plurality of processors, such as the processor 1801 and the processor 1805 in FIG. 18. Each of these processors may be a singlecore (single-CPU) processor, or may be a multi-core (multi-CPU) processor. The processor herein may be one or more devices, circuits, and/or processing cores configured to process data (for example, computer program instructions).

In an example, the communication device is a first terminal, or a chip used in the first terminal. In this case, the communication module 113 is configured to support the communication device in communicating with an external network element (for example, an access management network element). For example, the communication module 113 is configured to perform signal receiving and sending operations of the first terminal in the foregoing method embodiments. The processing module 112 is configured to perform a signal processing operation of the first terminal in the foregoing method embodiments.

For example, the communication module 113 is configured to perform a sending action performed by the first terminal in step 601 in FIG. 6 in the foregoing embodiments. The communication module 113 is configured to perform a receiving action performed by the first terminal in step 604 in FIG. 6 in the foregoing embodiments. The processing module 112 is configured to support the communication device in performing an action performed by the first terminal in step 605 in FIG. 6.

In another example, the communication device is an access management network element, or a chip used in the access management network element. In this case, the communication module 113 is configured to support the communication device in communicating with an external network element (for example, a first terminal or a unified data management network element). For example, the communication module 113 is configured to perform signal receiving and sending operations of the access management network element in the foregoing method embodiments. The processing module 112 is configured to perform a signal processing operation of the access management network element in the foregoing method embodiments.

For example, the communication module 113 is configured to perform receiving actions performed by the access management network element in step 601 and step 603 in FIG. 6 in the foregoing embodiments. The communication module 113 is configured to perform sending actions performed by the access management network element in step 602 and step 604 in FIG. 6 in the foregoing embodiments.

In still another example, the communication device is a unified data management network element, or a chip used in the unified data management network element. In this case, the communication module 113 is configured to support the communication device in communicating with an external network element (for example, an access management network element). For example, the communication module 113 is configured to perform signal receiving and sending operations of the unified data management network element in the foregoing method embodiments. The processing module 112 is configured to perform a signal processing operation of the unified data management network element in the foregoing method embodiments.

For example, the communication module 113 is configured to perform a receiving action performed by the unified data management network element in step 602 in FIG. 6 in the foregoing embodiments. The communication module 113 is configured to perform a sending action performed by the unified data management network element in step 603 in FIG. 6 in the foregoing embodiments.

In an example, the communication device is a second terminal, or a chip used in the second terminal. In this case, the communication module 113 is configured to support the communication device in communicating with an external network element (for example, an access network device). For example, the communication module 113 is configured to perform signal receiving and sending operations of the second terminal in the foregoing method embodiments. The processing module 112 is configured to perform a signal processing operation of the second terminal in the foregoing method embodiments.

For example, the communication module 113 is configured to perform a receiving action performed by the second terminal in step 701 in FIG. 7 in the foregoing embodiments. The processing module 112 is configured to support the communication device in performing an action performed by the second terminal in step 702 in FIG. 7.

In an example, the communication device is a second terminal, or a chip used in the second terminal. In this case, the communication module 113 is configured to support the communication device in communicating with an external network element (for example, an access management network element). For example, the communication module 113 is configured to perform signal receiving and sending operations of the second terminal in the foregoing method embodiments. The processing module 112 is configured to perform a signal processing operation of the second terminal in the foregoing method embodiments.

For example, the communication module 113 is configured to perform a sending action performed by the second terminal in step 801 in FIG. 8 in the foregoing embodiments. The communication module 113 is configured to perform a receiving action performed by the second terminal in step 802 in FIG. 8 in the foregoing embodiments.

In a possible embodiment, the communication module 113 is configured to perform receiving actions performed by the second terminal in step 904 and step 905 in FIG. 9 in the foregoing embodiments. The processing module 112 is configured to support the communication device in performing actions performed by the second terminal in step 906 and step 907 in FIG. 9.

In another possible embodiment, the processing module 112 is configured to support the communication device in performing an action performed by the second terminal in step 1004 in FIG. 10.

In an example, the communication device is an access management network element, or a chip used in the access management network element. In this case, the communication module 113 is configured to support the communication device in communicating with an external network element (for example, a second terminal). For example, the communication module 113 is configured to perform signal receiving and sending operations of the access management network element in the foregoing method embodiments. The processing module 112 is configured to perform a signal processing operation of the access management network element in the foregoing method embodiments.

For example, the communication module 113 is configured to perform a receiving action performed by the access management network element in step 801 in FIG. 8 in the foregoing embodiments. The communication module 113 is configured to perform a sending action performed by the access management network element in step 802 in FIG. 8 in the foregoing embodiments.

In a possible embodiment, the processing module 112 is configured to support the communication device in performing an action performed by the access management network element in step 902 in FIG. 9. The communication module 113 is configured to perform a sending action performed by the access management network element in step 904 or step 905 in FIG. 9 in the foregoing embodiments.

In another possible embodiment, the processing module 112 is configured to support the communication device in performing an action performed by the access management network element in step 1002 in FIG. 10.

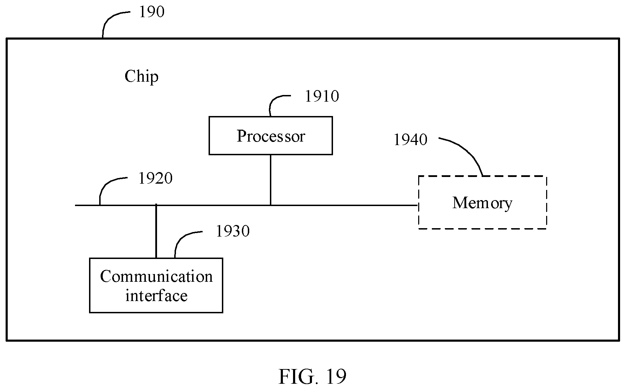

FIG. 19 is a schematic diagram of a structure of a chip 190 according to an embodiment of this application. The chip 190 includes one or more (including two) processors 1910 and a communication interface 1930.

Optionally, the chip 190 further includes a memory 1940. The memory 1940 may include a read-only memory and a random access memory, and provide operation instructions and data for the processor 1910. A part of the memory 1940 may further include a non-volatile random access memory (non-volatile random access memory, NVRAM).

In some implementations, the memory 1940 stores the following elements: an executable module or a data structure, a subset thereof, or an extended set thereof.

In this embodiment of this application, a corresponding operation is performed by invoking the operation instructions (where the operation instructions may be stored in an operating system) stored in the memory 1940.

In a possible implementation, structures of chips used in a first terminal, a second terminal, an access management network element, a unified data management network element, and an access network device are similar, and different apparatuses may use different chips to implement respective functions.

The processor 1910 controls processing operations of any one of the first terminal, the second terminal, the access management network element, the unified data management network element, and the access network device, and the processor 1910 may also be referred to as a central processing unit (central processing unit, CPU).

The memory 1940 may include the read-only memory and the random access memory, and provide the instructions and data for the processor 1910. The part of the memory 1940 may further include the NVRAM. For example, during application, the memory 1940, the communication interface 1930, and the memory 1940 are coupled together by using a bus system 1920. The bus system 1920 may further include a power bus, a control bus, a status signal bus, and the like in addition to a data bus. However, for clarity of description, various buses are denoted as the bus system 1920 in FIG. 19.

The methods disclosed in embodiments of this application may be applied to the processor 1910 or implemented by the processor 1910. The processor 1910 may be an integrated circuit chip and has a signal processing capability. In an implementation process, steps of the methods may be implemented by using a hardware integrated logic circuit in the processor 1910, or by using instructions in a form of software. The processor 1910 may be a general-purpose processor, a digital signal processor (digital signal processor, DSP), an ASIC, a field-programmable gate array (field-programmable gate array, FPGA) or another programmable logic device, a discrete gate or a transistor logic device, or a discrete hardware component. The processor 1910 may implement or perform methods, steps, and logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 1940, and the processor 1910 reads information in the memory 1940 and completes the steps in the foregoing methods in combination with hardware of the processor.

In a possible implementation, the communication interface 1930 is configured to perform receiving and sending steps of the first terminal, the second terminal, the access management network element, the unified data management network element, and the access network device in the embodiments shown in FIG. 6 to FIG. 16. The processor 1910 is configured to perform processing steps of the first terminal, the second terminal, the access management network element, the unified data management network element, and the access network device in the embodiments shown in FIG. 6 to FIG. 16.

The communication module may be a communication interface of the apparatus, and is configured to receive a signal from another apparatus. For example, when the apparatus is implemented as a chip, the communication module is a communication interface used by the chip to receive a signal from or send a signal to another chip or apparatus.

According to an aspect, a computer-readable storage medium is provided. The computer-readable storage medium stores instructions. When the instructions are run, functions performed by the first terminal in FIG. 6 are implemented.

According to an aspect, a computer-readable storage medium is provided. The computer-readable storage medium stores instructions. When the instructions are run, functions performed by the access management network element in FIG. 6 are implemented.

According to an aspect, a computer-readable storage medium is provided. The computer-readable storage medium stores instructions. When the instructions are run, functions performed by the unified data management network element in FIG. 6 are implemented.

According to an aspect, a computer-readable storage medium is provided. The computer-readable storage medium stores instructions. When the instructions are run, functions performed by the second terminal in FIG. 7 are implemented.

According to an aspect, a computer-readable storage medium is provided. The computer-readable storage medium stores instructions. When the instructions are run, functions performed by the access network device in FIG. 7 are implemented.

According to an aspect, a computer-readable storage medium is provided. The computer-readable storage medium stores instructions. When the instructions are run, the computer-readable storage medium may implement functions of the second terminal in FIG. 8 to FIG. 10.

According to an aspect, a computer-readable storage medium is provided. The computer-readable storage medium stores instructions. When the instructions are run, the computer-readable storage medium may implement functions of the access management network element in FIG. 8 to FIG. 10.

According to an aspect, a computer program product including instructions is provided. The computer program product includes the instructions. When the instructions are run, functions performed by the first terminal in FIG. 6 are implemented.

According to another aspect, a computer program product including instructions is provided. The computer program product includes the instructions. When the instructions are run, functions performed by the access management network element in FIG. 6 are implemented.

According to an aspect, a computer program product including instructions is provided. The computer program product includes the instructions. When the instructions are run, functions performed by the unified data management network element in FIG. 6 are implemented.

According to still another aspect, a computer program product including instructions is provided. The computer program product includes the instructions. When the instructions are run, functions performed by the second terminal in FIG. 7 are implemented.

According to still another aspect, a computer program product including instructions is provided. The computer program product includes the instructions. When the instructions are run, functions performed by the access network device in FIG. 7 are implemented.

According to still another aspect, a computer program product including instructions is provided. The computer program product includes the instructions. When the instructions are run, functions of the second terminal in FIG. 8 to FIG. 10 are implemented.

According to still another aspect, a computer program product including instructions is provided. The computer program product includes the instructions. When the instructions are run, functions of the access management network element in FIG. 8 to FIG. 10 are implemented.

According to an aspect, a chip is provided. The chip is used in a first terminal. The chip includes at least one processor and a communication interface, the communication interface is coupled to the at least one processor, and the processor is configured to run instructions, to implement functions performed by the first terminal in FIG. 6.

According to another aspect, an embodiment of this application provides a chip. The chip is used in an access management network element. The chip includes at least one processor and a communication interface, the communication interface is coupled to the at least one processor, and the processor is configured to run instructions, to implement functions performed by the access management network element in FIG. 6.

According to an aspect, an embodiment of this application provides a chip. The chip is used in a unified data management network element. The chip includes at least one processor and a communication interface, the communication interface is coupled to the at least one processor, and the processor is configured to run instructions, to implement functions of the unified data management network element in FIG. 6.

According to an aspect, an embodiment of this application provides a chip. The chip is used in a second terminal. The chip includes at least one processor and a communication interface, the communication interface is coupled to the at least one processor, and the processor is configured to run instructions, to implement functions of the second terminal in FIG. 7.

According to an aspect, an embodiment of this application provides a chip. The chip is used in an access network device. The chip includes at least one processor and a communication interface, the communication interface is coupled to the at least one processor, and the processor is configured to run instructions, to implement functions of the access network device in FIG. 7.

According to an aspect, an embodiment of this application provides a chip. The chip is used in a second terminal. The chip includes at least one processor and a communication interface, the communication interface is coupled to the at least one processor, and the processor is configured to run instructions, to implement functions of the second terminal in FIG. 8 to FIG. 10.

According to an aspect, an embodiment of this application provides a chip. The chip is used in an access management network element. The chip includes at least one processor and a communication interface, the communication interface is coupled to the at least one processor, and the processor is configured to run instructions, to implement functions of the access management network element in FIG. 8 to FIG. 10.

An embodiment of this application provides a communication system. The communication system includes an access management network element and a unified data management network element. The access management network element is configured to perform a function performed by the access management network element in FIG. 6, and the unified data management network element is configured to perform a function performed by the unified data management network element in FIG. 6.

In a possible embodiment, the communication system may further include a terminal, where the terminal is configured to perform a function performed by the first terminal in FIG. 6.

An embodiment of this application provides a communication system. The communication system includes an access network device and a terminal. The terminal is configured to perform a function performed by the second terminal in FIG. 7, and the access network device is configured to perform a function performed by the access network device in FIG. 7.

An embodiment of this application provides a communication system. The communication system includes an access management network element and a terminal. The access management network element is configured to perform any function performed by the access management network element in FIG. 8 to FIG. 10, and the terminal is configured to perform any function performed by the second terminal in FIG. 8 to FIG. 10.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or instructions are loaded and executed on a computer, the procedure or functions according to embodiments of this application are completely or partially performed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD).

Although this application is described with reference to the embodiments, in a process of implementing this application that claims protection, a person skilled in the art may understand and implement other variations of the disclosed embodiments by viewing the accompanying drawings, disclosed content, and the appended claims. In the claims, "comprising" (comprising) does not exclude another component or another step, and "a" or "one" does not exclude a case of a plurality. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A network access method, comprising:
sending, by a first terminal, a first message to an access management network element in a first non-public network, wherein the first message is used to request to register the first terminal with the first non-public network;
receiving, by the first terminal, a second message from the access management network element, wherein the second message is used to indicate that registration of the first terminal with the first non-public network is rejected, the second message comprises first indication information, and the first indication information indicates that access of the first terminal to the first non-public network is forbidden; and
updating, by the first terminal, a forbidden network list of the first terminal based on the first indication information, wherein an updated forbidden network list comprises information about the first non-public network.

2. The method according to claim 1, wherein the first non-public network supports interworking with a first public network.

3. The method according to claim 1 or 2, wherein the method further comprises:
selecting, by the first terminal based on the updated forbidden network list, a network other than the first non-public network for registration.

4. The method according to any one of claims 1 to 3, wherein the method further comprises:
starting, by the first terminal, a timer based on the first indication information; and when the timer expires, deleting, by the first terminal, the information about the first non-public network from the updated forbidden network list.

5. The method according to any one of claims 1 to 4, wherein the method further comprises:
the second message comprises a timer time value, and setting, by the first terminal, the timer based on the timer time value.

6. A network access method, comprising:
receiving, by an access management network element in a first non-public network, a first message from a first terminal, wherein the first message is used to request to register the first terminal with the first non-public network;
obtaining, by the access management network element, a third message from a unified data management network element in a first public network; and
sending, by the access management network element, a second message to the first terminal based on the third message, wherein the second message is used to indicate that registration of the first terminal with the first non-public network is rejected, the second message comprises first indication information, and the first indication information indicates that access of the first terminal to the first non-public network is forbidden.

7. The method according to claim 6, wherein the third message comprises subscription data of the first terminal, the subscription data comprises second indication information, and the second indication information is used to indicate that the first terminal can access only a public network, or the second indication information is used to indicate that the first terminal cannot access a non-public network.

8. The method according to claim 7, wherein the second indication information comprises a supported network list of the first terminal, and the network list does not comprise information about the first non-public network.

9. The method according to claim 6, wherein the third message comprises third indication information, and the third indication information is used to indicate that subscription data of the first terminal is not successfully obtained.

10. The method according to claim 9, wherein the third message further comprises a cause value of unsuccessful obtaining of the subscription data of the first terminal, and the cause value indicates that the first terminal is not allowed to access the first non-public network.

11. The method according to any one of claims 6 to 10, wherein the method further comprises:
determining, by the access management network element based on the third message, to reject the registration of the first terminal with the first non-public network.

12. A network access method, comprising:
receiving, by a unified data management network element in a first public network, a query message from an access management network element in a first non-public network, wherein the query message is used to query for subscription data of a first terminal; and
sending, by the unified data management network element, a third message to the access management network element, wherein the third message comprises one or more of the following: the subscription data of the first terminal and a cause value, the subscription data comprises second indication information, the second indication information is used to indicate that the first terminal can access only a public network or the second indication information is used to indicate that the first terminal cannot access a non-public network, and the cause value indicates that the first terminal is not allowed to access the first non-public network.

13. The method according to claim 12, wherein the second indication information comprises a supported network list of the first terminal, and the network list does not comprise information about the first non-public network.

14. The method according to claim 12, wherein the third message comprises third indication information, and the third indication information is used to indicate that the subscription data of the first terminal is not successfully obtained.

15. A communication apparatus, wherein the communication apparatus is a first terminal or a chip used in the first terminal, and the apparatus comprises:
a communication unit, configured to send a first message to an access management network element in a first non-public network, wherein the first message is used to request to register the first terminal with the first non-public network, wherein
the communication unit is further configured to receive a second message from the access management network element, wherein the second message is used to indicate that registration of the first terminal with the first non-public network is rejected, the second message comprises first indication information, and the first indication information indicates that access of the first terminal to the first non-public network is forbidden; and
a processing unit, configured to update a forbidden network list of the first terminal based on the first indication information, wherein an updated forbidden network list comprises information about the first non-public network.

16. The apparatus according to claim 15, wherein the first non-public network supports interworking with a first public network.

17. The apparatus according to claim 15 or 16, wherein the processing unit is further configured to select, based on the updated forbidden network list, a network other than the first non-public network for registration.

18. The apparatus according to any one of claims 15 to 17, wherein the processing unit is further configured to: start a timer based on the first indication information; and when the timer expires, delete the information about the first non-public network from the updated forbidden network list.

19. The apparatus according to any one of claims 15 to 18, wherein the second message comprises a timer time value, and the processing unit is further configured to set the timer based on the timer time value.

20. A communication apparatus, wherein the communication apparatus is an access management network element or a chip used in the access management network element, and the apparatus comprises:
a communication unit, configured to receive a first message from a first terminal, wherein the first message is used to request to register the first terminal with a first non-public network, wherein
the communication unit is further configured to obtain a third message from a unified data management network element in a first public network; and
the communication unit is further configured to send a second message to the first terminal based on the third message, wherein the second message is used to indicate that registration of the first terminal with the first non-public network is rejected, the second message comprises first indication information, and the first indication information indicates that access of the first terminal to the first non-public network is forbidden.

21. The apparatus according to claim 20, wherein the third message comprises subscription data of the first terminal, the subscription data comprises second indication information, and the second indication information is used to indicate that the first terminal can access only a public network, or the second indication information is used to indicate that the first terminal cannot access the first non-public network.

22. The apparatus according to claim 21, wherein the second indication information comprises a supported network list of the first terminal, and the network list does not comprise information about the first non-public network.

23. The apparatus according to claim 20, wherein the third message comprises third indication information, and the third indication information is used to indicate that subscription data of the first terminal is not successfully obtained.

24. The apparatus according to claim 23, wherein the third message further comprises a cause value of unsuccessful obtaining of the subscription data of the first terminal, and the cause value indicates that the first terminal is not allowed to access the first non-public network.

25. The apparatus according to any one of claims 20 to 24, wherein the apparatus further comprises a processing unit, configured to determine, based on the third message, to reject the registration of the first terminal with the first non-public network.

26. A communication apparatus, wherein the communication apparatus is a unified data management network element or a chip used in the unified data management network element, and the communication apparatus comprises:
a communication unit, configured to receive a query message from an access management network element in a first non-public network, wherein the query message is used to query for subscription data of a first terminal, wherein
the communication unit is further configured to send a third message to the access management network element, wherein the third message comprises one or more of the following: the subscription data of the first terminal and a cause value, the subscription data comprises second indication information, the second indication information is used to indicate that the first terminal can access only a public network or the second indication information is used to indicate that the first terminal cannot access a non-public network, and the cause value indicates that the first terminal is not allowed to access the first non-public network.

27. The apparatus according to claim 26, wherein the second indication information comprises a supported network list of the first terminal, and the network list does not comprise information about the first non-public network.

28. The apparatus according to claim 26 or 27, wherein the third message comprises third indication information, and the third indication information is used to indicate that the subscription data of the first terminal is not successfully obtained.

29. A communication system, comprising an access management network element in a first non-public network and a unified data management network element in a first public network, wherein
the access management network element is configured to perform the method according to any one of claims 6 to 11; and
the unified data management network element is configured to perform the method according to any one of claims 12 to 14.

30. The system according to claim 29, wherein the system further comprises a first terminal, and the first terminal is configured to perform the method according to any one of claims 1 to 5.

31. A computer-readable storage medium, wherein the readable storage medium stores instructions; and when the instructions are executed, the method according to any one of claims 1 to 5, the method according to any one of claims 6 to 11, or the method according to any one of claims 12 to 14 is performed.

32. A chip, wherein the chip comprises a processor and a communication interface; the communication interface is coupled to the processor; the processor is configured to run a computer program or instructions, to implement the method according to any one of claims 1 to 5, the method according to any one of claims 6 to 11, or the method according to any one of claims 12 to 14; and the communication interface is configured to communicate with another module outside the chip.

33. A communication apparatus, comprising at least one processor, wherein the at least one processor is coupled to a memory; and the at least one processor is configured to run instructions stored in the memory, to perform the method according to any one of claims 1 to 5, the method according to any one of claims 6 to 11, or the method according to any one of claims 12 to 14.
